(19) Europäisches Patentamt
European Patent Office
Office européen des brevets

(11) **EP 3 872 043 B1**

(12) **EUROPÄISCHE PATENTSCHRIFT**

(45) Veröffentlichungstag und Bekanntmachung des Hinweises auf die Patenterteilung:
**20.08.2025  Patentblatt 2025/34**

(21) Anmeldenummer: **21157931.3**

(22) Anmeldetag: **18.02.2021**

(51) Internationale Patentklassifikation (IPC):
**C03C 3/087** (2006.01)     **C03C 3/097** (2006.01)
**C03C 10/00** (2006.01)

(52) Gemeinsame Patentklassifikation (CPC):
**C03C 10/0027; C03C 3/087; C03C 3/097**

(54) **KRISTALLISIERBARES LITHIUMALUMINIUMSILIKAT-GLAS UND DARAUS HERGESTELLTE GLASKERAMIK SOWIE VERFAHREN ZUR HERSTELLUNG DES GLASES UND DER GLASKERAMIK UND VERWENDUNG DER GLASKERAMIK**

CRYSTALLIZABLE LITHIUM ALUMINOSILICATE GLASS AND GLASS CERAMIC PRODUCED THEREFROM AND METHOD FOR PRODUCING GLASS AND GLASS CERAMIC AND USE OF THE GLASS CERAMIC

VERRE DE SILICATE DE LITHIUM-ALUMINIUM CRISTALLISABLE ET VITROCÉRAMIQUE FABRIQUÉE À PARTIR DE CELUI-CI, AINSI QUE PROCÉDÉ DE FABRICATION DU VERRE ET DU VERRE CÉRAMIQUE ET UTILISATION DU VERRE CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2020  DE 102020202600**

(43) Veröffentlichungstag der Anmeldung:
**01.09.2021  Patentblatt 2021/35**

(73) Patentinhaber: **SCHOTT AG**
**55122 Mainz (DE)**

(72) Erfinder:
• **Siebers, Friedrich**
**55283 Nierstein (DE)**
• **Weiss, Evelin**
**55131 Mainz (DE)**

(74) Vertreter: **WSL Patentanwälte Partnerschaft mbB**
**Postfach 6145**
**65051 Wiesbaden (DE)**

(56) Entgegenhaltungen:
EP-A1- 1 837 312     EP-A1- 2 191 962
EP-A1- 2 883 846     EP-A1- 3 018 107

**Beschreibung**

Die Erfindung betrifft ein kristallisierbares Lithiumaluminiumsilikat-Glas, das in eine LAS-Glaskeramik umwandelbar ist, gemäß dem Oberbegriff des Anspruchs 1.

Die Erfindung bezieht sich auch auf die daraus hergestellte Glaskeramik, ein Verfahren zu deren Herstellung und die Verwendung einer solchen LAS-Glaskeramik.

LAS-Glaskeramiken finden aufgrund ihrer besonderen Materialeigenschaften, beispielsweise ihres geringen Ausdehnungskoeffizienten verbunden mit hoher Temperaturunterschiedsfestigkeit und Temperaturwechselbeständigkeit, ihrer hohen Festigkeit, ihrer chemischen Beständigkeit und ihrer Transparenz breiten Einsatz. In der Regel wird das thermische Ausdehnungsverhalten so eingestellt, dass die Werkstoffe im Bereich ihrer Anwendungstemperaturen über sehr niedrige Ausdehnung, meist von $\alpha_{20/700} < 0 \pm 1{,}5 \cdot 10^{-6}$/K verfügen. Anforderungen für den Einsatz bei hohen Temperaturen beinhalten, dass die Glaskeramiken die geforderten Eigenschaften (wie z.B. thermische Ausdehnung, Transmission, Temperaturbelastbarkeit) während ihrer Lebensdauer beibehalten. Hinsichtlich Temperaturbelastbarkeit ist die wenn auch geringe Schrumpfung der Glaskeramik (compaction) bei hohen Temperaturen die kritische Größe. Da die Glaskeramikartikel im Einsatz meist ungleichmäßig durchwärmt werden, bauen sich sonst mit der Zeit durch die lokal unterschiedlich starke Schrumpfung Spannungen im Artikel auf.

Verbreitete Anwendungen der LAS-Glaskeramiken sind Brandschutzverglasungen, Kochgeschirr, transparente Kaminsichtscheiben, Ofensichtscheiben sowie als Kochflächen. Bei der Anwendung als Kochflächen werden die transparenten Glaskeramikplatten entweder mit Farboxiden eingefärbt oder auf der Unterseite mit einer blickdichten, meist farbigen Beschichtung versehen, um die Durchsicht auf die technischen Einbauten zu verhindern und die farbliche Anmutung bereitzustellen. Aussparungen in der Unterseitenbeschichtung ermöglichen das Anbringen von farbigen und weißen Displayanzeigen, meist Leuchtdioden oder Bildschirmen.

Für das Aussehen und die optischen Eigenschaften von Glaskeramiken sind Transmission und Streuung wichtige Eigenschaften.

Eine Klasse solcher Glaskeramiken sind die transparenten, nicht eingefärbten Glaskeramiken, bei deren Herstellung keine färbenden Verbindungen zugegeben werden. Bei der anderen Klasse, den transparenten eingefärbten Glaskeramiken, wird zur Einfärbung im Volumen meist $V_2O_5$ zugesetzt, um die Helligkeit zu verringern und ein schwarzes Erscheinungsbild zu erreichen. Dies ist für Kochflächen mit schwarzem Erscheinungsbild typisch.

Bei den transparenten, nicht eingefärbten Glaskeramiken ist hohe Transparenz, das bedeutet hohe Helligkeit und eine geringe Farbe, gewünscht. Beides bedeutet geringe Absorption, da die Absorptionsbanden je nach Lage im visuell sichtbaren Spektrum sowohl die Helligkeit erniedrigen als auch die Farbe erhöhen. Deshalb beträgt die Helligkeit solcher Glaskeramiken bei einer Dicke von 4 mm in der Regel mehr als 80 %.

In der Literatur finden sich für die Helligkeit auch die Bezeichnungen Lichttransmission oder integrale Transmission.

Transparente, nicht eingefärbte Glaskeramiken weisen allerdings durch die Keimbildner $TiO_2$ und fallweise $SnO_2$ sowie die in den Gemengerohstoffen vorkommenden Verunreinigungen, insbesondere Eisenverunreinigungen, eine geringe Farbe auf. Diese ist unerwünscht und wird durch technische Maßnahmen minimiert.

Ein weiteres wesentliches Merkmal der LAS-Glaskeramiken ist die Streuung, die durch die Größe der Kristalle, deren Doppelbrechung und den Unterschied der Brechzahlen von Kristallen und Restglas bestimmt wird. Durch ausreichende Mengen der Keimbildner sowie ausreichende Keimbildungszeiten während der Keramisierung wird eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich von 20 nm bis 50 nm. Für eine geringe Streuung sind weiterhin geringe Doppelbrechung der Kristalle und eine gute Anpassung der Brechungsindizes von Kristallen und Restglasphase erforderlich. Diese Bedingungen für hohe Transparenz von LAS-Glaskeramiken sind dargestellt in dem Artikel "Nanophase Glass-Ceramics", Journal of the American Ceramic Society, Vol. 82, No. 1, pp. 5-16; 1999 von den Autoren Beall und Pickney.

Der Brechungsindex der Restglasphase wird durch ihre Zusammensetzung und die Abkühlrate bei der Keramisierung eingestellt.

In der Regel ist eine geringe Streuung erwünscht, damit die Durchsicht nicht verfälscht wird und die Anzeigen klar und deutlich sichtbar sind. In besonderen Anwendungsfällen ist auch eine gesteuerte Streuung gewünscht, um zum Beispiel ein transluzentes weißes Erscheinungsbild zu erzeugen.

Die Helligkeit oder Lichttransmission wird beschrieben durch den Helligkeitswert Y (brightness) gemäß dem CIE-Normfarbsystem oder den L* Wert im CIELAB Farbsystem. Die deutsche Umsetzung der internationalen CIE-Norm ist in der DIN 5033 festgelegt. Das CIELAB Farbmodell ist in der DIN EN ISO 11664-4 "Colorimetry -- Part 4: CIE 1976 L*a*b* Colour space" genormt.

Die dafür erforderlichen spektralphotometrischen Messungen erfolgen im Rahmen der Erfindung an polierten Proben in einem Spektralbereich zwischen 380 und 780 nm. Aus den gemessenen spektralen Werten in dem Bereich, der das sichtbare Lichtspektrum repräsentiert, wird die Lichttransmission mit Wahl von Normlichtart und Beobachterwinkel für die vorliegende Dicke berechnet.

Es hat sich bei Glaskeramiken eingebürgert, als Maß für die Farbe die Größe c* (Buntheit) aus dem CIELAB Farbsystem mit den Koordinaten L*, a*, b* heranzuziehen, gemäß der Berechnung:

$$c* = \sqrt{(a*)^2 + (b*)^2}$$

Die Koordinaten des CIELAB Farbsystems lassen sich in bekannter Weise aus den Farbkoordinaten und der Helligkeit Y des CIE Farbsystems berechnen. Die Bestimmung des c*- Wertes der Proben erfolgt aus den durchgeführten spektralphotometrischen Messungen der Transmission mit den gewählten Parametern für Normlichtart und Beobachterwinkel.

Die Streuung der Glaskeramiken wird durch Messung der Trübung (engl. haze) bestimmt. Trübung ist nach ASTM D1003-13 der prozentuale Anteil durchgelassenen Lichts, der vom eingestrahlten Lichtbündel im Mittel um mehr als 2,5° abweicht.

Die großtechnische Herstellung transparenter Glaskeramiken erfolgt in mehreren Stufen. Zunächst wird das kristallisierbare Ausgangsglas aus einem Gemisch aus Scherben und pulverförmigen Gemengerohstoffen geschmolzen und geläutert. Die Glasschmelze erreicht dabei Temperaturen von 1550 °C bis maximal 1750 °C, meist bis zu 1700 °C. Fallweise wird auch eine Hochtemperaturläuterung oberhalb 1750 °C, üblicherweise bei Temperaturen um 1900 °C eingesetzt. Für transparente Glaskeramiken sind Arsen- und Antimonoxid bei konventionellen Läutertemperaturen unter 1700 °C hinsichtlich guter Blasenqualitäten technisch und wirtschaftlich bewährte Läutermittel. Zunehmend wird als Ersatz für Arsen- und Antimonoxid das Läutermittel $SnO_2$ allein oder in Kombination mit einem oder mehreren Läuterzusätzen wie Halogeniden (F, Cl, Br), $CeO_2$, $MnO_2$, $Fe_2O_3$, Schwefelverbindungen propagiert.

Die Verwendung von $SnO_2$ ist jedoch mit Nachteilen verbunden. $SnO_2$ selbst ist als Läutermittel technisch weniger effektiv und benötigt höhere Temperaturen zur Abgabe des läuteraktiven Sauerstoffs. Hohe Konzentrationen an $SnO_2$ in der Größenordnung des eingesetzten $As_2O_3$ von ca. 1 Gew.-% sind wegen der Entglasung von Sn-haltigen Kristallen bei der Heißformgebung nachteilig. Der für transparente Glaskeramiken zweite wesentliche Nachteil bei der Substitution von Arsen- durch Zinnoxid als Läutermittel besteht darin, dass $SnO_2$ zu einer zusätzlichen Absorption führt und die Farbe erhöht. Die Absorption beruht hauptsächlich auf Farbkomplexen mit dem Keimbildner $TiO_2$. Bei höheren Läutertemperaturen verstärkt sich die Absorption, da diese mit dem höheren Anteil an $Sn^{2+}$ zunimmt. Die Sn/Ti-Farbkomplexe färben stärker als die bekannten Fe/Ti-Farbkomplexe, während sich die Fe/Ti-Farbkomplexe stärker auf die Helligkeit auswirken und diese erniedrigen. Die Fe/Ti-Farbkomplexe führen zu einer rotbraunen, die Sn/Ti-Farbkomplexe zu einer gelbbraunen Farbe. Der Absorptionsmechanismus beider Farbkomplexe beruht mutmaßlich auf elektronischen Übergängen (charge transfer) zwischen den beiden benachbarten polyvalenten Kationen.

Die Bildung der genannten charge-transfer-Farbkomplexe findet maßgeblich bei der Kristallisation statt. Um die Konzentrationen der Farbkomplexe zu verringern, müssten die Keimbildungs- und Kristallisationszeiten verkürzt werden. Dem steht entgegen, dass die Verkürzung der Keimbildungszeit zu verstärkter Lichtstreuung und die Verkürzung der Kristallisationszeit zu Unebenheiten des Artikels führen.

Nach dem Einschmelzen und Läutern erfährt das Glas üblicherweise eine Heißformgebung durch Gießen, Pressen, Walzen oder Floaten. Für viele Anwendungen werden die Glaskeramiken in flacher Form benötigt, beispielsweise in Form von Scheiben. Das Walzen und Floaten wird zur Herstellung der Platten eingesetzt. Für die wirtschaftliche Herstellung dieser LAS-Gläser sind eine niedrige Schmelztemperatur und eine niedrige Verarbeitungstemperatur $V_A$ bei der Heißformgebung gewünscht. Weiterhin darf das Glas bei der Formgebung keine Entglasung zeigen, das heißt, es dürfen sich keine größeren Kristalle oberhalb von etwa 5 μm bilden, die in den Glaskeramik-Artikeln die Festigkeit erniedrigen oder visuell störend sind. Da die Formgebung in der Nähe der Verarbeitungstemperatur $V_A$ (Viskosität $10^4$ dPas) des Glases stattfindet, muss gewährleistet sein, dass die obere Entglasungstemperatur der Schmelze in der Nähe und bevorzugt unter der Verarbeitungstemperatur liegt, um die Bildung größerer Kristalle zu vermeiden. Der bei der Formgebung über Walzen kritische Bereich ist der Kontakt der Glasschmelze mit der Ziehdüse aus Edelmetall (üblicherweise aus einer Pt/Rh-Legierung), bevor das Glas durch die Walzen geformt und abgekühlt wird. Beim Floaten ist es der Glaskontakt mit der spout lip und der vordere Bereich des Floatbades im Kontakt mit dem flüssigen Sn, in dem das Glas eine hohe Kristallwachstumsgeschwindigkeit besitzt.

Das kristallisierbare LAS-Glas wird in einem anschließenden Temperaturprozess durch gesteuerte Kristallisation (Keramisierung) in die Glaskeramik umgewandelt. Diese Keramisierung erfolgt in einem zweistufigen Temperaturprozess, bei dem zunächst durch Keimbildung bei einer Temperatur zwischen 680 °C und 800 °C Keime, üblicherweise aus $ZrO_2/TiO_2$-Mischkristallen, erzeugt werden. Die Hochquarz-Mischkristalle wachsen bei erhöhter Temperatur auf diesen Keimen auf. Bei der maximalen Herstelltemperatur um etwa 900 °C wird das Gefüge der Glaskeramik homogenisiert und die optischen, physikalischen und chemischen Eigenschaften eingestellt. Für eine wirtschaftliche Herstellung sind kurze Keramisierungszeiten vorteilhaft.

Die weitere Umwandlung in Keatit-Mischkristalle erfolgt bei Temperaturerhöhung in einem Temperaturbereich von ca. 950 °C bis 1250 °C. Mit der Umwandlung erhöht sich der thermische Ausdehnungskoeffizient der Glaskeramik, und durch weiteres Kristallwachstum und damit einhergehende Lichtstreuung wandelt sich das transparente in transluzentes bis opakes Aussehen um.

Für die Hochquarz-Mischkristalle finden sich in der Literatur auch die Synonyme "β-Quarz" oder "β-Eukryptit" und für die Keatit-Mischkristalle "β-Spodumen" als Bezeichnung für die Kristallphasen.

In den technischen Gemengerohstoffen für die Schmelzen sind weitere färbende Elemente wie Cr, Mn, Ni, V und besonders Fe als Verunreinigungen enthalten. Das Fe färbt außer über die Fe/Ti-Farbkomplexe auch ionisch als $Fe^{2+}$ oder $Fe^{3+}$. Wegen der hohen Kosten eisenarmer Rohstoffe ist es jedoch unwirtschaftlich, den $Fe_2O_3$-Gehalt auf Werte unter ca. 50 ppm zu verringern.

Bei einigen etablierten Anwendungen von Glaskeramiken finden zunehmend hitzebeständige Spezialgläser, wie Alumino- oder Borosilikatgläser Verwendung. Durch technische Zusatzmaßnahmen wie eine Luftkühlung bei Kaminscheiben oder elektronische Temperaturbegrenzung bei induktionsbeheizten Kochflächen können die Einsatztemperaturen erniedrigt und fallweise ein Einsatz für diese Spezialgläser ermöglicht werden. Gegenüber diesen Gläsern stellt die Farbe von transparenten Glaskeramiken einen wesentlichen Nachteil dar. Es besteht daher ein Bedarf, transparente Glaskeramiken mit geringer Farbe zu entwickeln.

In der US 3,252,811 und der JP 05-193985 werden transparente Glaskeramiken und deren Herstellung aus kristallisierbaren LAS-Gläsern mit $ZrO_2$ als Keimbildner ohne Kombination mit $TiO_2$ und $SnO_2$ offenbart. Diese Glaskeramiken verfügen über hervorragende Transparenz und geringe Farbe. Nachteilig sind die erforderlichen höheren Gehalte des Keimbildners $ZrO_2$ beim Einschmelzen des Gemenges. Zur Vermeidung von Relikten sind höhere Schmelztemperaturen oder verringerter Wannendurchsatz erforderlich. Bei der Formgebung ist die Bildung von $ZrO_2$-Kristallen kritisch (Entglasung). Weiter sind die erforderlichen langen Keramisierungszeiten wirtschaftlich nachteilig. Aus diesen Gründen haben Glaskeramiken mit reiner $ZrO_2$-Keimbildung keine technische Umsetzung und Verbreitung gefunden.

Die Ansätze, den für die Farbkomplexe in Glaskeramiken mit verantwortlichen Keimbildner $TiO_2$ zu vermeiden (WO 2008/065167 A1) oder zu begrenzen (WO 2008/065166 A1), haben bisher nicht zu einer technischen Umsetzung geführt. Die erforderlichen höheren Gehalte der alternativen Keimbildner $ZrO_2$ und/ oder $SnO_2$ führen zu Nachteilen bei der Schmelze und Formgebung, wie höhere Schmelz- und Formgebungstemperaturen sowie unzureichende Entglasungsfestigkeit bei der Formgebung.

Weiterhin sind die EP 2 883 846 A1 und die EP 2 191 962 A1 zu nennen.

Die EP 1 837 312 A1 beschreibt die physikalische Entfärbung von transparenten Glaskeramiken mit Hochquarz-Mischkristallen als Hauptkristallphase durch Zusätze von 0,01 - 0,4 Gew.-% $Nd_2O_3$. Das Prinzip des physikalischen Entfärbens beruht darauf, dass die vorhandenen Absorptionsbanden durch komplementäre Absorptionsbanden des Entfärbemittels neutralisiert werden. Dies führt naturgemäß zu stärkerer Absorption des Lichts und erniedrigt damit die Helligkeit. Um günstige Fertigungsbedingungen, d.h. niedrige Schmelz- und niedrige Formgebungstemperaturen zu erreichen, enthalten die Beispielgläser dieser Schrift hohe Gehalte der viskositätsabsenkenden Komponente MgO von 0,58 bis 1,2 Gew.-%, die für eine geringe Farbe nachteilig sind.

In der EP 3 018 107 A1 werden hochkristalline LAS-Glaskeramiken beschrieben, die über einen geringen Anteil an Restglasphase von weniger als 20 % verfügen. Die erfindungsgemäß niedrigen Anteile der Restglasbildner $Na_2O$, $K_2O$, CaO, SrO und BaO sowie die hohen $Li_2O$- Gehalte sind für das Angleichen der Brechungsindizes von Kristallphase und Restglasmatrix nachteilig. Zunehmende Unterschiede in den Brechungsindizes erhöhen Streuung und Farbe.

Bei der Entwicklung besteht daher Bedarf, ein ganzes Bündel von gegenläufigen Forderungen an Glas und Glaskeramik, wie günstige Fertigungseigenschaften ohne Nachteile bei der Produktqualität der Glaskeramik, wie insbesondere Farbe, Helligkeit sowie geringe Streuung bei kurzen Keramisierungszeiten zu vereinbaren.

Der Erfindung liegt die Aufgabe zugrunde, ein kristallisierbares Lithiumaluminiumsilikat-Glas zu finden,

- das günstige Fertigungseigenschaften für eine wirtschaftliche Herstellung besitzt,
- wobei die daraus hergestellte transparente Glaskeramik eine geringe Farbe, eine hohe Helligkeit und eine geringe Streuung aufweisen soll, wobei kurze Keramisierungszeiten angestrebt werden.

Diese Aufgabe wird mit einem kristallisierbaren Lithiumaluminiumsilikat-Glas mit den Merkmalen des Patentanspruchs 1 und mit einer daraus hergestellten Glaskeramik mit den Merkmalen des Anspruchs 20 gelöst.

Es ist auch Aufgabe der Erfindung, ein Verfahren zur Herstellung des Glases und der Glaskeramik und deren Verwendung zu finden. Diese Aufgaben werden durch die weiteren unabhängigen Ansprüche gelöst.

Das erfindungsgemäße kristallisierbare Lithiumaluminiumsilikat-Glas und die aus dem Glas herstellbare bzw. hergestellte erfindungsgemäße Glaskeramik weisen folgende Komponenten (in Gew.-% auf Oxidbasis) auf:

| | |
|---|---|
| $Li_2O$ | 3 - < 4,5 |
| $Al_2O_3$ | 19 - 24 |

(fortgesetzt)

| | |
|---|---|
| SiO$_2$ | 62 - 70 |
| Na$_2$O | 0 - 1,5 |
| K$_2$O | 0 - 1,5 |
| MgO | 0,01 - < 0,5 |
| CaO | 0-1,5 |
| SrO | 0 - 1,5 |
| BaO | 0 - 3 |
| ZnO | 0 - 3 |
| TiO$_2$ | > 1,6 - 2,8 |
| ZrO$_2$ | 1 - < 2,5 |
| P$_2$O$_5$ | 0 - < 4 |
| Fe$_2$O$_3$ | 0,005 - 0,025 |
| As$_2$O$_3$ | 0,1 - 2 mit der Bedingung ( in Gew.-%): |

$$1,3 < Na_2O + K_2O + CaO + SrO + BaO < 3,5 \quad \text{(Bedingung B1)}.$$

Li$_2$O, Al$_2$O$_3$ und SiO$_2$

Die Oxide Li$_2$O, Al$_2$O$_3$ und SiO$_2$ sind bzw. werden in den angegebenen Grenzen notwendige Bestandteile der Hochquarz- und/oder Keatit-Mischkristallphasen.

Für das kristallisierbare Glas und die daraus hergestellte Glaskeramik soll der Gehalt Li$_2$O von 3 bis weniger als 4,5 Gew.-% betragen. Der Mindestgehalt ist erforderlich, um die gewünschte niedrige Verarbeitungstemperatur des Glases zu erreichen. Es hat sich gezeigt, dass bei höheren Gehalten ab 4,5 Gew.-% die thermische Ausdehnung der Glaskeramik mit Hochquarz-Mischkristallen als Hauptkristallphase ungünstige negative Werte annimmt. Gehalte ab 4,5 Gew.-% sind auch hinsichtlich der gewünschten niedrigen Buntheit c* der Glaskeramik nachteilig. Bevorzugt beträgt der Li$_2$O-Gehalt weniger als 4,3 Gew.-%, weiter bevorzugt weniger als 4,1 Gew.-% und besonders bevorzugt weniger als 4 Gew.-%. Der Mindestgehalt beträgt bevorzugt 3,2 und besonders bevorzugt 3,4 Gew.-%. Ein besonders bevorzugter Bereich ist 3,2 bis weniger als 4 Gew.-%.

Der Gehalt an Al$_2$O$_3$ beträgt 19 - 24 Gew.-%. Höhere Gehalte als 24 Gew.-% sind nachteilig wegen der Neigung zu Entglasung von Mullit bei der Formgebung. Weiter hat sich gezeigt, dass mit höheren Gehalten die Streuung bei kurzen Keramisierungszeiten zunimmt. Bevorzugt ist daher ein Anteil von höchstens 23 Gew.-%. Der Mindestgehalt beträgt 19 Gew.-%, weil Al$_2$O$_3$ für eine niedrige Verarbeitungstemperatur und eine geringe Buntheit c* der Glaskeramik von Vorteil ist. Der Al$_2$O$_3$-Mindestgehalt beträgt bevorzugt mindestens 20 Gew.-%.

Der Gehalt der Hauptkomponente SiO$_2$ soll mindestens 62 Gew.-% betragen, weil dies für die geforderten Eigenschaften der Glaskeramik, wie z.B. niedrige thermische Ausdehnung und chemische Beständigkeit vorteilhaft ist. Darüber hinaus wird die Streuung bei kurzen Keramisierungszeiten verringert. Besonders vorteilhaft ist ein Mindestgehalt von 64 Gew.-%. Der SiO$_2$-Gehalt soll maximal 70 Gew.-% betragen, weil diese Komponente die Verarbeitungstemperatur des Glases und die Schmelztemperatur erhöht. Bevorzugt beträgt der SiO$_2$-Gehalt maximal 68 Gew.-%.

Restglasbildner

Neben dem Läutermittel As$_2$O$_3$ sind die Alkalien Na$_2$O und K$_2$O sowie die Erdalkalien CaO, SrO, BaO wesentliche Bestandteil der Restglasphase, da sie nicht in die Hochquarz- beziehungsweise Keatit-Mischkristalle eingebaut werden. Die Zusätze verbessern die Schmelzbarkeit und die Entglasungsfestigkeit bei der Formgebung des Glases. Das Einschmelzen der schwerlöslichen Rohstoffe für ZrO$_2$ und SiO$_2$ wird beschleunigt, und die Schmelz- sowie die Verarbeitungstemperatur des Glases wird erniedrigt.

Die Alkalioxide Na$_2$O, K$_2$O und die Erdalkalioxide CaO, SrO, BaO reichern sich außer in der Restglasphase zwischen den Kristallen auch an der Oberfläche der Glaskeramik an. Beim Keramisieren bildet sich eine ca. 50 nm bis 1000 nm dicke glasige Oberflächenschicht, die nahezu frei ist von Kristallen und die mit diesen Elementen angereichert ist, wobei Li$_2$O abgereichert ist. Diese glasige Oberflächenschicht wirkt sich günstig auf die chemische Beständigkeit der Glaskeramik aus. Für ausreichende Dicke der glasigen Schicht von mindestens 50 nm sind Mindestgehalte aus diesen Komponenten, d. h. der Alkalien und der Erdalkalien, erforderlich. Höhere Gehalte als die Obergrenzen können zu höheren Dicken der glasigen Schicht führen, was für die Festigkeit der Glaskeramik nachteilig ist.

Um die genannten Fertigungseigenschaften, chemische Beständigkeit und die optischen Eigenschaften Helligkeit, Farbe sowie die Streuung der transparenten Glaskeramik zu optimieren, ist es daher erforderlich, die Mikrostruktur, d.h. die Anteile und Zusammensetzung von Kristallitphase und Restglasphase, gezielt einzustellen. Für eine geringe Streuung ist eine gute Anpassung der Brechungsindizes von Kristallen und Restglasphase erforderlich. Da sich die Fe/Ti-Farbkomplexe in der Restglasphase bilden, ist diese auch für deren Bildungskinetik maßgeblich.

Die Gehalte der Restglasbildner müssen jedoch begrenzt werden. Höhere Gehalte wirken sich ungünstig auf die Zeit-/Temperaturbelastbarkeit der Glaskeramik aus. Auch ist die Kristallisation der Hochquarz-Mischkristalle beeinträchtigt und durch Bildung größerer Kristallite kommt es zu verstärkter Streuung. Der Summe der Restglasbildner kommt eine entscheidende Bedeutung zu, um Farbe, Helligkeit, Streuung und wirtschaftliche Herstellung zu vereinbaren und der Nachteil gegenüber Spezialgläsern mit hohen Werten der Helligkeit und niedriger Farbe kann vermindert werden.

Es hat sich überraschend herausgestellt, dass bei Einhaltung der Bedingung 1 die Gläser und die daraus hergestellten Glaskeramiken eine Farbe c* von $\leq$ 3, eine Helligkeit Y von > 84 % und eine Streuung (haze) von < 2,5 % aufweisen.

Die Streuung (engl. haze) wird nach ASTM D1003-13 an 4 mm dicken polierten proben der LAS-Glaskeramik gemessen. Der haze-Wert beträgt bevorzugt weniger als 2,5 %, weiter bevorzugt weniger als 2 % und besonders bevorzugt weniger als 1,8 %. Oberhalb von 2,5 % ist die Trübung in der Regel visuell störend. Werte weniger als 2 % sind bevorzugt, weil die Streuung sonst bei dunklen, also zum Beispiel schwarzen Unterseitenbeschichtungen auffällig werden kann.

Die erfindungsgemäße transparente Glaskeramik weist dadurch keine visuell störende Lichtstreuung auf. Dadurch wird die Durchsicht auf Gegenstände und Unterseitenbeschichtungen nicht verfälscht. Leuchtende Anzeigen wie Displays oder Bildschirme unter der Glaskeramikplatte sind dadurch klar mit scharfen Konturen und ohne Streuung sichtbar.

Das erfindungsgemäße Glas besitzt eine Summe der Restglas bildenden Komponenten $Na_2O + K_2O + CaO + SrO + BaO$ (Gew.-%) von bevorzugt weniger als 3, bevorzugt weniger als 2,6 und besonders bevorzugt weniger als 2,2 Gew.-%. Die Summe der Komponenten soll bevorzugt mehr als 1,5 und besonders bevorzugt mehr als 1,7 Gew.-% betragen.

Da die einzelnen Komponenten in dieser Summenbeziehung unterschiedliche Effekte auf die Fertigungs- und Materialeigenschaften der Glaskeramik haben, sind für die Optimierung zusätzliche Komponentengrenzen und weitere Komponentenbeziehungen vorteilhafterweise einzustellen.

Keimbildner $TiO_2$, $ZrO_2$

Die Komponente $TiO_2$ ist als wirksamer Keimbildner unverzichtbar für die Transparenz der Glaskeramik in Verbindung mit günstigen Fertigungseigenschaften. Daher beträgt der Mindestgehalt mehr als 1,6 Gew.-%. Dieser Mindestgehalt ermöglicht hohe Keimbildungsraten und damit auch bei kurzen Keramisierungszeiten eine ausreichende Bildung von Keimen, die eine niedrige mittlere Kristallitgröße begünstigen. Damit ist es möglich, auch bei kurzen Keramisierungszeiten Glaskeramiken ohne visuell störende Streuung zu erhalten.

Höhere $TiO_2$-Gehalte sind aber aufgrund der Bildung von Fe/Ti-Farbkomplexen kritisch. Daher sollte der $TiO_2$-Anteil bis zu 2,8 Gew.-% betragen. Bevorzugt ist ein minimaler $TiO_2$-Gehalt von 1,8 Gew.-%. Dieser Mindestgehalt ist für die Verringerung der Keramisierungszeiten vorteilhaft, um Streuung zu vermeiden. Besonders bevorzugt ist ein $TiO_2$-Gehalt von mehr als 2 Gew.-%.

Bevorzugt sind höchstens 2,6 Gew.-% $TiO_2$ enthalten, um die Farbwirkung zu begrenzen.

Als weiterer Keimbildner ist $ZrO_2$ vorgesehen. Der $ZrO_2$-Gehalt beträgt 1 bis weniger als 2,5 Gew.-%. Bevorzugt ist der $ZrO_2$-Gehalt auf weniger als 2,2 Gew.-% und weiter bevorzugt auf weniger als 2 Gew.-% begrenzt, da höhere Gehalte das Einschmelzverhalten des Gemenges bei der Glasherstellung verschlechtern und es bei der Formgebung zur Entglasung durch Bildung von Zr-haltigen Kristallen kommen kann. Da die Komponente hilft, höhere Gehalte des alternativen Keimbildner $TiO_2$ zu vermeiden, ist sie für die Bereitstellung einer Glaskeramik mit niedriger Buntheit c* von Vorteil. Der $ZrO_2$-Mindestgehalt beträgt bevorzugt 1,6 Gew.-%.

Alkalien

Die Alkalien $Na_2O$ und $K_2O$ erniedrigen die Schmelztemperatur und die Verarbeitungstemperatur bei der Formgebung des Glases. Das Einschmelzen der schwer löslichen Rohstoffe für $ZrO_2$ und $SiO_2$ wird beschleunigt. Die Gehalte müssen bei beiden auf maximal 1,5 Gew.-% begrenzt werden. Zu hohe Gehalte beeinträchtigen das Kristallisationsverhalten bei der Umwandlung des kristallisierbaren Ausgangsglases in die Glaskeramik und wirken sich ungünstig auf die Zeit-/Temperaturbelastbarkeit der Glaskeramik aus.

Bevorzugt ist der $Na_2O$-Gehalt 0 Gew.-% oder > 0 Gew.-%, weiter bevorzugt enthält das Glas mindestens 0,05 Gew.-% $Na_2O$ und besonders bevorzugt mindestens 0,1 Gew.-%. Der maximale Anteil beträgt vorzugsweise 1,5 Gew.-%, insbesondere 1 Gew.-%. Vorzugsweise beträgt der $Na_2O$-Anteil 0,05 Gew.-% bis 1 Gew.-%.

Lithiumaluminiumsilikat-Glas enthält vorzugsweise $Na_2O$ mit einem Anteil von 0,05 Gew.-% bis 1 Gew.-%.

Bevorzugt ist der K$_2$O-Gehalt 0 Gew.-% oder > 0 Gew.-%, weiter bevorzugt enthält das Glas mindestens 0,05 Gew.-% K$_2$O und besonders bevorzugt mindestens 0,1 Gew.-%. Der maximale Anteil beträgt vorzugsweise 1,5 Gew.-%, insbesondere 1 Gew.-%. Vorzugsweise beträgt der K$_2$O-Anteil 0,05 bis 1 Gew.-%.

Das Lithiumaluminiumsilikat-Glas enthält vorzugsweise K$_2$O mit einem Anteil von 0,05 Gew.-% bis 1 Gew.-%.

In einer bevorzugten Ausführung gilt 0,2 Gew.-% ≤ Na$_2$O + K$_2$O ≤ 1,5 Gew.-% (Bedingung B2).

Die Summe der Alkalien Na$_2$O + K$_2$O beträgt weiter bevorzugt maximal 1,2 Gew.-% und besonders bevorzugt weniger als 1 Gew.-%. Bei höheren Gehalten wird es schwierig, den thermischen Ausdehnungskoeffizienten der Keatit-Glaskeramik auf niedrige Werte $\alpha_{20/700}$ < 1,2·10$^{-6}$/K einzustellen. Die Summe der Alkalien Na$_2$O + K$_2$O beträgt weiter bevorzugt mindestens 0,3 und besonders bevorzugt mehr als 0,4 Gew.-%, um die Schmelzbarkeit weiter zu verbessern und die Verarbeitungstemperatur zu erniedrigen.

Besonders bevorzugt gilt 0,4 Gew.-% < Na$_2$O + K$_2$O < 1 Gew.-% (Bedingung B2a).

Erdalkalien

Die Komponente CaO hat sich als vorteilhaft erwiesen, um die Verarbeitungstemperatur V$_A$ abzusenken und die Entglasungsfestigkeit zu verbessern. Sie führt allerdings zu einer erhöhten Farbe und Streuung bei kurzen Keramisierungszeiten. CaO ist in Gehalten von maximal 1,5 Gew.-%, bevorzugt maximal 0,8 Gew.-% enthalten. Besonders bevorzugt ist die Obergrenze für den CaO-Gehalt von weniger als 0,6 Gew.-%, um die Streuung bei kurzen Keramisierungszeiten zu minimieren. Bevorzugt gilt CaO gleich 0 Gew.-% oder > 0 Gew.-%. Bevorzugt ist CaO eine Komponente des kristallisierbaren Glases und der Glaskeramik und der Gehalt beträgt ≥ 0,05 Gew.-%, weiter bevorzugt mindestens 0,1 Gew.-% und besonders bevorzugt mindestens 0,2 Gew.-%. Ein bevorzugter Bereich ist 0,05 Gew.-% bis 0,8 Gew.-%.

Das Lithiumaluminiumsilikat-Glas enthält vorzugsweise CaO mit einem Anteil von 0,05 Gew.-% bis 0,8 Gew.-%.

Der BaO-Gehalt beträgt vorzugsweise bis 3 Gew.-%. Der SrO-Gehalt beträgt vorzugsweise bis 1,5 Gew.-%. Der BaO-Gehalt beträgt bevorzugt bis 2 Gew.-%. Der SrO-Gehalt beträgt bevorzugt bis 1 Gew.-%. Besonders bevorzugt ist ein BaO-Gehalt von 0 Gew.-% oder > 0 Gew.-%, wenigstens 0,2 Gew.-%.

Ein bevorzugter Bereich für BaO ist 0,2 Gew.-% bis 2 Gew.-%.

Der SrO-Anteil beträgt vorzugsweise 0 Gew.-%, besonders bevorzugt > 0 Gew.-%, insbesondere ≥ 0,02 Gew.-%.

Ein bevorzugter Bereich für SrO ist 0,02 Gew.-% bis 1 Gew.-%.

Um den Brechungsindex der Restglasphase einzustellen und dem der Hochquarz-Mischkristalle anzunähern, ist es vorteilhaft, wenn das kristallisierbare Glas und die daraus hergestellte Glaskeramik CaO und/oder SrO enthält. Die Summe der Erdalkalioxide CaO und SrO beträgt wenigstens 0,05 Gew.-%, bevorzugt wenigstens 0,1 Gew.-% und besonders bevorzugt wenigstens 0,2 Gew.-%.

Sie beträgt höchstens 1 Gew.-%, bevorzugt höchstens 0,8 Gew.-%, da sonst die Streuung wieder zunimmt. Die Glaskeramik soll diese Komponenten mit den angegebenen Grenzen als Restglasbestandteile enthalten. CaO und SrO sind als Bestandteile der Restglasphase für geringe Entglasungsneigung und geringe Streuung vorteilhaft.

Besonders bevorzugt gilt 0,05 Gew.-% ≤ CaO + SrO ≤ 1 Gew.-% (Bedingung B3).

MgO/As$_2$O$_3$

Dem Verhältnis der Komponenten MgO/As$_2$O$_3$ kommt eine wichtige Bedeutung zu, um geringe Farbe, hohe Helligkeit der Glaskeramik mit guter Läuterbarkeit und niedrigen Schmelz- und Formgebungstemperaturen des Glases zu vereinbaren. So können bei wirtschaftlicher Herstellung die Buntheit c* weiter verringert und die Helligkeit Y der Glaskeramik weiter verbessert werden und der Nachteil gegenüber Spezialgläsern mit hohen Werten der Helligkeit und niedriger Farbe kann vermindert werden.

Das erfindungsgemäße Glas besitzt ein Verhältnis der Komponenten MgO/As$_2$O$_3$ (beide in Gew.-%) von bevorzugt weniger als 1 (Bedingung B4), weiter bevorzugt weniger als 0,7 (Bedingung B4a), und besonders bevorzugt weniger als 0,5.

Dies ist eine wesentliche Bedingung, um die gewünschten günstigen Fertigungseigenschaften des Glases mit geringer Farbe, hoher Helligkeit der daraus hergestellten transparenten Glaskeramik zu vereinbaren.

In Versuchsreihen mit variierten MgO- und As$_2$O$_3$-Gehalten wurde herausgefunden, dass die beiden Komponenten in ihrer Wirkung auf den Fe/Ti-Farbkomplex entgegengesetzt wirken. Wie beschrieben verstärken höhere MgO-Gehalte die Bildung der Farbkomplexe während diese Bildung durch höhere As$_2$O$_3$-Gehalte verringert wird. Durch eine bevorzugte Obergrenze des Quotienten der beiden ergänzen sich die Effekte in vorteilhafter Weise.

Das Verhältnis der Komponenten soll bevorzugt größer als 0,05 (Bedingung B4b), weiter bevorzugt größer als 0,08 und besonders bevorzugt größer als 0,1 sein. Dies ist darin begründet dass bei niedrigen MgO-Gehalten trotz höherer As$_2$O$_3$-Gehalte die Läuterung wegen der höheren Schmelztemperatur verschlechtert wird.

Es wurde ein eng eingegrenzter Zusammensetzungsbereich gefunden, der günstige Fertigungseigenschaften mit geringer Farbe, hoher Helligkeit und geringer Streuung der LAS-Glaskeramik verknüpft. Insbesondere die geringe Farbe der erfindungsgemäßen transparenten Glaskeramiken kommt den Werten näher, die für temperaturstabile Spezialgläser typisch sind, bei denen die Buntheit c* in der Regel kleiner als 1 ist.

Die günstigen Fertigungseigenschaften für eine wirtschaftliche Herstellung beinhalten kostengünstige Gemengerohstoffe, niedrige Schmelz- und Formgebungstemperaturen, Entglasungsfestigkeit und kurze Keramisierungszeiten. Bei den kurzen Keramisierungszeiten wird eine hohe Helligkeit ohne visuell störende Lichtstreuung (Trübung) erreicht.

MgO

Eine weitere Schlüsselkomponente für das Erreichen der gewünschten Eigenschaften der Glaskeramik ist der MgO-Gehalt. Die Komponente MgO ist sowohl Bestandteil der Mischkristalle als auch der Restglasphase und hat daher starken Einfluss auf viele Eigenschaften. Die Komponente erniedrigt die Schmelz- und Verarbeitungstemperatur des Glases und begünstigt daher die wirtschaftliche Herstellung. Der MgO-Gehalt soll 0,01 bis weniger als 0,5 Gew.-% betragen. Der MgO-Gehalt beträgt mindestens 0,01 Gew.-%, bevorzugt mindestens 0,05 Gew.- %, weiter bevorzugt mindestens 0,1 Gew.-% und besonders bevorzugt mindestens 0,15 Gew.-%. In der Glaskeramik mit Hochquarz-Mischkristallen als Hauptkristallphase führt MgO zu einer besonders nachteiligen Verstärkung der Farbe und einer Verringerung der Helligkeit. Dies wird der Begünstigung der Ausbildung von absorbierenden Fe/Ti-Farbkomplexen zugeschrieben.

Der MgO-Gehalt soll weniger als 0,5 Gew.-%, bevorzugt höchstens 0,4 Gew.-% und besonders bevorzugt höchstens 0,35 Gew.-% betragen. In einem bevorzugten MgO-Wertebereich von 0,05 Gew.-% bis 0,4 Gew.-% lassen sich die Anforderungen an geringe Farbe der Glaskeramik und niedriger Verarbeitungstemperatur besonders gut miteinander verbinden.

$As_2O_3$

Da das alternative Läutermittel $SnO_2$ zu einer Färbung durch Sn/Ti-Farbspezies führt, wird $As_2O_3$ als Läutermittel eingesetzt. Der $As_2O_3$-Gehalt beträgt 0,1 bis 2 Gew.-%. Der Mindestgehalt ist für eine ausreichende Läuterung erforderlich. Im offenbarten Zusammensetzungsbereich ist diese Komponente auch vorteilhaft für hohe Helligkeit und geringe Farbe. Dies wird auf die kinetische Hemmung der Bildung der Fe/Ti-Farbkomplexe zurückgeführt. Bevorzugt ist der Mindestgehalt daher 0,2 und besonders bevorzugt 0,4 Gew.-%. Höhere Gehalte als 2 Gew.-% sind für die Zeit-/Temperaturbelastbarkeit der Glaskeramik nachteilig, da sich der thermische Ausdehnungskoeffizient beim Einsatz bei höheren Temperaturen ändert. Aufgrund der Arsen-Verdampfung bei Schmelztemperaturen sind höhere Gehalte wegen der erforderlichen Filtermaßnahmen wirtschaftlich und unter Umweltgesichtspunkten nachteilig. Eine bevorzugte Obergrenze beträgt 1,5 und weiter bevorzugt 1,2 Gew.-%.

ZnO

Die Komponente ZnO ist vorteilhaft für die Erniedrigung der Schmelz- und Verarbeitungstemperatur des Glases und für verminderte Streuung bei kurzen Keramisierungszeiten. ZnO wird in die Mischkristallphasen eingebaut, und ein Teil verbleibt auch in der Restglasphase. Die Komponente führt vergleichbar der Komponente $Li_2O$ zu einer Verringerung der thermischen Ausdehnung der Glaskeramik. Hinsichtlich Streuung ist vorteilhaft, dass ZnO die Anisotropie der Hochquarz-Mischkristalle vermindert. Das heißt, die Unterschiede zwischen der a- und c-Achse der Kristalle werden vermindert. Es ist naheliegend, dass dadurch die Doppelbrechung der Kristalle vermindert wird. Der ZnO-Gehalt ist wegen der Verdampfungsneigung aus der Glasschmelze und der resultierenden Kondensation als Walzbelag auf Werte von höchstens 3 Gew.-% begrenzt. Bevorzugt ist ein ZnO-Gehalt von höchstens 2,5 Gew.-% und besonders bevorzugt von höchstens 2,0 Gew.-%. Vorzugsweise gilt ZnO gleich 0 Gew.-% oder > 0 Gew.-%. Bevorzugt ist ein Mindestgehalt von 0,1, weiter bevorzugt 0,5 und besonders bevorzugt mehr als 1 Gew.-%.

Der ZnO-Gehalt beträgt vorzugsweise 0 Gew.-% bis 3 Gew.-%, insbesondere 0,1 Gew.-% bis 3 Gew.-%. Besonders bevorzugt ist ein Bereich von 0,1 Gew.-% bis 2,5 Gew.-%.

Das Lithiumaluminiumsilikat-Glas enthält vorzugsweise ZnO mit einem Anteil von 0,1 Gew.-% bis 2,5 Gew.-%.

$P_2O_5$

Zusätze können zur Verbesserung der Schmelzbarkeit und Entglasungsfestigkeit beitragen. Höhere Gehalte sind nachteilig für die chemische Beständigkeit insbesondere die Säurebeständigkeit. Das kristallisierbare Glas und die daraus hergestellte Glaskeramik sollen weniger als 4 Gew.-% $P_2O_5$ enthalten. Vorzugsweise gilt für $P_2O_5$ 0 Gew.-% oder > 0 Gew.-%. Eine bevorzugte Untergrenze liegt bei 0,01 Gew.-% und besonders bevorzugt bei 0,02 Gew.-%. Eine bevorzugte Obergrenze liegt bei 2 Gew.-% $P_2O_5$, weiter bevorzugt bei weniger als 1,3 und besonders bevorzugt weniger als 1 Gew.-%.

Ein bevorzugter Bereich ist 0 Gew.-% bis < 4 Gew.-%, insbesondere 0,01 Gew.-% bis < 4 Gew.-%. Besonders bevorzugt ist ein Bereich von 0,01 Gew.-% bis < 1,3 Gew.-%.

Das Lithiumaluminiumsilikat-Glas enthält vorzugsweise $P_2O_5$ mit einem Anteil von 0,01 bis weniger als 1,3 Gew.-%.

$Fe_2O_3$

Wegen der hohen Kosten eisenarmer Gemengerohstoffe ist es unwirtschaftlich, den $Fe_2O_3$-Gehalt des kristallisierbaren Glases auf Werte unter 0,005 Gew.-%, also auf weniger als 50 ppm zu begrenzen. Bevorzugt sind wenigstens 0,008 Gew.-% im Glas, bzw. der daraus hergestellten Glaskeramik. Andererseits erhöht sich mit dem $Fe_2O_3$-Gehalt auch die Konzentration der Fe/Ti-Farbkomplexe in der Glaskeramik. Die Farbe (Buntheit c*) wird erhöht und durch Absorption wird die Helligkeit Y vermindert. Das kristallisierbare Glas und die daraus hergestellte Glaskeramik sollen deswegen höchstens 0,025 Gew.-%, bevorzugt bis zu 0,02 Gew.-% an $Fe_2O_3$ enthalten.

Ein bevorzugter Bereich für $Fe_2O_3$ ist 0,008 Gew.-% bis 0,02 Gew.-%.

Zusätzliche Läutermittel

Die Läuterung mittels $As_2O_3$ kann durch den Zusatz weiterer chemischer Läutermittel wie $SnO_2$, $Sb_2O_3$ und Ceroxid und von Läuterzusätzen wie Manganoxid, Sulfat-, Halogenidverbindungen unterstützt werden. Für die einzelnen Komponenten sind die aufgeführten bevorzugten Obergrenzen zu beachten. Die Summe der Läuterzusätze neben dem $As_2O_3$ beträgt bevorzugt weniger als 2 Gew.-%.

Es wird bevorzugt auf den Zusatz von Halogenidverbindungen als Läuterhilfsmittel verzichtet. Diese verdampfen bei der Schmelze und gelangen in die Schmelzwannenatmosphäre. Dabei bilden sich korrosive Verbindungen wie HF, HCl und HBr, die wegen der Korrosion der Feuerfeststeine in der Schmelzwanne und im Abgasstrang nachteilig sind. Die Gläser und Glaskeramiken sind daher bevorzugt bis auf unvermeidliche Verunreinigungsgehalte frei von F, Cl, Br und deren einzelne Gehalte betragen üblicherweise weniger als 200 ppm.

$Sb_2O_3$

Zusätze von $Sb_2O_3$ können bei der Läuterung unterstützen. Allerdings wirkt sich diese Komponente nachteilig bei der Helligkeit und Farbe aus. Die Gehalte sind daher vorzugsweise auf weniger als 0,5, weiter bevorzugt auf weniger als 0,2 und besonders bevorzugt auf weniger als 0,1 Gew.-% beschränkt. Besonders bevorzugt wird kein $Sb_2O_3$ zugesetzt und es sind nur die aus Verunreinigungen stammenden Gehalte von typischerweise weniger als 200 ppm vorhanden.

$SnO_2$

$SnO_2$ wirkt als Läutermittel und ist ebenfalls als Keimbildner wirksam. Nachteilig ist diese Komponente für die Farbe der Glaskeramik wegen der Bildung der Sn/Ti-Farbspezies bei der Kristallisation.

Eine neue besondere Aufmerksamkeit gilt den Fertigungseigenschaften bei der gebräuchlichen Formgebung über wassergekühlte Walzen. Die großtechnischen Versuche mit $SnO_2$-geläuterten LAS-Gläsern mit 0,18 Gew.-% $SnO_2$, die in der WO 2013/124373 A1 offenbart sind, haben gezeigt, dass sich bei der Formgebung ein Walzbelag aufbaut, der neben Zn auch Sn enthält. Aufgrund der Wirkung von Zinnoxid als Keimbildner induziert dieser Walzbelag im Kontakt mit der Glasschmelze zunehmend Oberflächenkristalle auf dem sich abkühlenden Glasband.

Diese sind visuell auffällig und können die Festigkeit erniedrigen. Die Entfernung des Walzbelags ist mit Produktionsausfall verbunden. Mit der Erfindung wird dieser wirtschaftliche Nachteil durch den Walzbelag vermindert.

Zur Vermeidung der für $SnO_2$ genannten Nachteile wird $SnO_2$ nur als fakultative Komponente eingesetzt und ist dabei vorzugsweise begrenzt, nämlich auf weniger als 0,1 und bevorzugt weniger als 0,05 Gew.-%. Mit der Verringerung des $SnO_2$-Gehaltes nehmen Farbe und Walzbelag kontinuierlich ab. Besonders bevorzugt wird kein $SnO_2$ zugesetzt und es sind nur die aus Verunreinigungen stammenden Gehalte von weniger als 100 ppm vorhanden.

Bevorzugt gilt für die Summe der Keimbildner $TiO_2 + ZrO_2$ bzw., sofern $SnO_2$ vorhanden ist, für $TiO_2 + ZrO_2 + SnO_2$ ein Wertebereich von 3,7 bis 4,8 Gew.-%. Der Mindestgehalt ist für eine ausreichend schnelle Keimbildung erforderlich. Bevorzugt beträgt der Mindestgehalt 4 Gew.-% um die Streuung bei schneller Keramisierung weiter zu vermindern. Die Obergrenze von 4,8 Gew.-% ergibt sich aus der Forderung nach Entglasungsfestigkeit.

$B_2O_3$, PbO und Fluor

Auch der Zusatz von bis zu 1 Gew.-% $B_2O_3$ verbessert Schmelzbarkeit und Entglasungsfestigkeit, ist aber nachteilig für die Zeit-/Temperaturbelastbarkeit der Glaskeramik. Dies gilt auch für Zusätze von Fluor. Beiden Komponenten ist gemeinsam, dass sie die Stabilität der für die transparente Glaskeramik maßgeblichen Hauptkristallphase Hochquarz-Mischkristalle vermindern und den Übergang in die Keatit-Mischkristallphase begünstigen. Bevorzugt enthält die Glaskeramik weniger als 0,5 und besonders bevorzugt weniger als 0,2 Gew.-% $B_2O_3$. Besonders bevorzugt ist die Glaskeramik technisch frei von $B_2O_3$, das heißt die Gehalte liegen unter 1000 ppm, bevorzugt unter 500 und besonders bevorzugt unter 100 ppm.

Für den Zusatz von Fluor ist eine bevorzugte Obergrenze 0,5 Gew.-%. Weiter bevorzugt soll der Gehalt weniger als 0,2 Gew.-%, weiter bevorzugt weniger als 0,1 Gew.-%, weiter bevorzugt weniger als 500 ppm und besonders bevorzugt weniger als 100 ppm betragen.

Der Zusatz von PbO verbessert Schmelzbarkeit und Entglasungsfestigkeit, ist aber nachteilig für die Zeit-/Temperaturbelastbarkeit der Glaskeramik und für eine umweltfreundliche Zusammensetzung unerwünscht. Der Gehalt soll bevorzugt weniger als 0,1 Gew-% und weiter bevorzugt weniger als 100 ppm betragen. Besonders bevorzugt wird kein PbO zugesetzt und es sind nur die aus Verunreinigungen stammenden Gehalte von typischerweise weniger als 5 ppm vorhanden.

$Nd_2O_3$

Der $Nd_2O_3$-Anteil kann 0 Gew.-% oder > 0 Gew.-% sein.

Bei den aus den erfindungsgemäßen Lithiumaluminiumsilikat-Gläsern hergestellten transparenten Glaskeramiken wird die störende auf Fe/Ti-Farbkomplexen beruhende Farbe in einer bevorzugten Ausführungsform durch Zusätze von $Nd_2O_3$ in Gehalten von 0,005 Gew.-% bis 0,3 Gew.-% verringert. Unterhalb von 0,005 Gew.-% ist die entfärbende Wirkung gering und bevorzugte Untergrenzen für $Nd_2O_3$ sind 0,01 Gew.-%, insbesondere 0,03 Gew.-%. Oberhalb von 0,3 Gew.-% wird die Helligkeit durch die Absorption der Nd-Banden im Bereich des sichtbaren Lichtes unerwünscht verschlechtert. Bevorzugt werden daher bis zu 0,2 Gew.-% zugesetzt. Ein bevorzugter Bereich für $Nd_2O_3$ ist 0,01 Gew.-% bis 0,2 Gew.-%.

CoO

Zusätze von CoO in Mengen bis zu 30 ppm, bevorzugt bis zu 20 ppm können die Entfärbung unterstützen. Bevorzugt ist ein CoO-Gehalt von 0,1 ppm bis 20 ppm CoO. Oberhalb 30 ppm erzeugt das CoO in transparenten Glaskeramiken einen rötlichen Farbstich.

Färbende Verbindungen

Wegen der Verschlechterung der Helligkeit und Zunahme der Farbe enthält das Glas bis auf unvermeidliche Verunreinigungen vorzugsweise keine weiteren färbenden Verbindungen, wie Ce, Cr, Ni, Cu, V, Mo, W und/oder S, die zu einer gelben, orangen, braunen oder roten Einfärbung führen. Die Gehalte betragen bevorzugt weniger als 20 ppm und stammen aus Verunreinigungen der eingesetzten Gemengerohstoffe. Ein Maximal-Gehalt von 0,1 Gew.-% ist noch tolerierbar.

Soweit für Komponenten ein Anteil von 0 Gew.-% angegeben wird, bedeutet dies, dass auf die betreffende Komponente im Rohstoffgemenge verzichtet wird. Als unvermeidliche Verunreinigungen können diese Komponenten jedoch vorhanden sein.

In einer bevorzugten Ausführungsform besitzt sowohl das erfindungsgemäße kristallisierbare Lithiumaluminiumsilikat-Glas bzw. der daraus hergestellte Artikel oder die aus dem Glas hergestellte erfindungsgemäße Glaskeramik vorzugsweise folgende Zusammensetzung, die in Gew.-% auf Oxidbasis enthält:

| | |
|---|---|
| $Li_2O$ | 3,2 - < 4,3 |
| $Al_2O_3$ | 19 - 24 |
| $SiO_2$ | 62 - 68 |
| $Na_2O$ | 0 - 1 |
| $K_2O$ | 0 - 1 |
| $Na_2O + K_2O$ | 0,2 - 1,5 |
| MgO | 0,05 - < 0,5 |
| CaO | 0,05 - 1,5 |
| SrO | 0 - 1,5 |
| BaO | 0 - 3 |
| ZnO | 0 - 2,5 |

(fortgesetzt)

| | |
|---|---|
| TiO$_2$ | > 1,6 - 2,8 |
| ZrO$_2$ | 1 - < 2,5 |
| P$_2$O$_5$ | 0 - 2 |
| Fe$_2$O$_3$ | 0,008 - 0,025 |
| As$_2$O$_3$ | 0,2 - 2 |

mit der Bedingung ( in Gew.-%):

$$1,3 < Na_2O + K_2O + CaO + SrO + BaO < 3$$

Gemäß einer weiteren Ausführungsform besitzt das kristallisierbare Lithiumaluminiumsilikat-Glas bzw. der daraus hergestellte Artikel oder die aus dem Glas hergestellte Glaskeramik bevorzugt folgende Zusammensetzung, die in Gew.-% auf Oxidbasis enthält:

| | |
|---|---|
| Li$_2$O | 3,4 - < 4,3 |
| Al$_2$O$_3$ | 20 - 24 |
| SiO$_2$ | 62 - 68 |
| Na$_2$O | 0,05 - 1 |
| K$_2$O | 0 - 1 |
| Na$_2$O + K$_2$O | 0,2 - 1,2 |
| MgO | 0,1 - 0,4 |
| CaO | 0,05 - 0,8 |
| SrO | 0 - 1 |
| CaO+ SrO | 0,1 - 1 |
| BaO | 0 - 2 |
| ZnO | > 0 - 2,5 |
| TiO$_2$ | > 2 - 2,8 |
| ZrO$_2$ | 1 - < 2,2 |
| P$_2$O$_5$ | 0 - 1,5 |
| Fe$_2$O$_3$ | 0,008 - 0,02 |
| As$_2$O$_3$ | 0,2 - 1,5 |

mit der Bedingung (in Gew.-%):

$$1,5 < Na_2O + K_2O + CaO + SrO + BaO < 3$$

Um die Zielsetzung geringer Farbe mit hoher Lichttransmission und wirtschaftlicher Herstellung weiter zu verbessern, besitzt das kristallisierbare Lithiumaluminiumsilikat-Glas bzw. der daraus hergestellte Artikel oder die aus dem Glas hergestellte Glaskeramik eine besonders bevorzugte Zusammensetzung, die in Gew.-% auf Oxidbasis enthält:

| | |
|---|---|
| Li$_2$O | 3,4 - < 4 |
| Al$_2$O$_3$ | 20 - 23 |
| SiO$_2$ | 62 - 68 |
| Na$_2$O | 0,05 - 1 |
| K$_2$O | 0,05 - 1 |
| Na$_2$O+ K$_2$O | > 0,4 - < 1 |
| MgO | 0,1 - 0,4 |
| CaO | 0,05 - 0,8 |
| SrO | 0,02 - 1 |
| CaO + SrO | 0,1 - 0,8 |
| BaO | 0-2 |
| ZnO | 0,5 - 2,5 |
| TiO$_2$ | > 2 - 2,8 |

(fortgesetzt)

| | |
|---|---|
| $ZrO_2$ | 1 - < 2,2 |
| $P_2O_5$ | 0,01 - < 1 |
| $Fe_2O_3$ | 0,008 - 0,02 |
| $As_2O_3$ | 0,2 - 1,5 |

mit der Bedingung (in Gew.-%):

$$1,5 < Na_2O + K_2O + CaO + SrO + BaO < 3$$

Die zuvor genannten Zusammensetzungen sind so zu verstehen, dass die aufgeführten Komponenten wenigstens 98 Gew.-%, in der Regel 99 Gew.-% der Gesamtzusammensetzung betragen. Verbindungen einer Vielzahl von Elementen wie z. B. F, Cl, den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Ta, Y, Mo, Seltene Erden, Bi, V, Cr, Ni können in geringen Anteilen, typischerweise im ppm-Bereich, enthalten sein.

Der Wassergehalt der kristallisierbaren Gläser zur Herstellung der Glaskeramiken liegt abhängig von der Wahl der Gemengerohstoffe und den Prozessbedingungen bei der Schmelze vorzugsweise zwischen 0,015 und 0,06 mol/l. Dies entspricht $\beta$-OH-Werten von 0,16 bis 0,64 mm$^{-1}$. Bei der Umwandlung in die Glaskeramik ändert sich die IR-Bande, die zur Bestimmung des Wassergehaltes herangezogen wird. Dadurch ändert sich der $\beta$-OH-Wert für die Glaskeramik, ohne dass sich dabei der Wassergehalt ändert. Die Methode zur Bestimmung der $\beta$-OH-Werte ist z. B. in der EP 1 074 520 A1 beschrieben.

Die Blasenqualität des kristallisierbaren Lithiumaluminiumsilikat-Glases und der daraus hergestellten Glaskeramik entspricht den Anforderungen an Blasenzahlen von vorzugsweise unter 5, bevorzugt unter 2 Blasen/kg.

Das Lithiumaluminiumsilikat-Glas ist vorzufsweise durch eine Blasenzahl von unter 5, bevorzugt unter 2 Blasen/kg gekennzeichnet.

Dies gilt für Blasen größer als 0,1 mm in einer Dimension. Dies wird vorzugsweise mit den erfindungsgemäßen Gehalten des Läutermittels $As_2O_3$ und/oder vorzugsweise durch zusätzliche technische Maßnahmen sichergestellt, wie zum Beispiel der Wannenkonstruktion, mit Wällen und/oder Blasdüsen, dem Energieeinsatz und dem Durchsatz der Wanne.

Zur Erreichung besonders guter Blasenqualitäten bei hohen Wannendurchsätzen ist das kristallisierbare Glas optional mit einer Hochtemperaturläuterung bei Temperaturen von größer 1750 °C geläutert.

Glaskeramik

Die kristallisierbaren Lithiumaluminiumsilikat-Gläser werden durch einen mehrstufigen Temperaturprozess in eine Glaskeramik umgewandelt.

Die Glaskeramik weist dieselbe Zusammensetzung auf wie das Lithiumaluminiumsilikat-Glas.

Die Glaskeramik ist vorzugsweise transparent.

Gemäß einer ersten Ausführungsform enthält die Glaskeramik Hochquarz-Mischkristalle als Hauptkristallphase.

Die Glaskeramik ist vorzugsweise transparent und enthält vorzugsweise Hochquarz-Mischkristalle als Hauptkristallphase.

Für die Minimierung der Streuung der Glaskeramiken mit Hochquarz-Mischkristallen als Hauptkristallphase ist es vorteilhaft, die Kristallitgrößen zu minimieren. Allerdings waren dafür bisher in der Regel wirtschaftlich nachteilige längere Keimbildungs- und Keramisierungszeiten erforderlich. Mit der erfindungsgemäßen Zusammensetzung werden Glaskeramiken erhalten, bei denen die Keimbildungsund Kristallisationsprozesse schneller ablaufen, so dass sich die Keramisierungszeiten verkürzen lassen.

Aufgrund der kurzen Keramisierungszeiten besitzen die Hochquarz-Mischkristalle der Glaskeramik nach der Keramisierung bevorzugt eine mittlere Kristallitgröße von mindestens 25 nm. Besonders bevorzugt ist die mittlere Kristallitgröße größer als 35 nm. Die wegen zunehmender Streuung bevorzugte Obergrenze ist eine mittlere Kristallitgröße kleiner als 50 nm.

Der Kristallphasenanteil der Hochquarz-Mischkristalle der Glaskeramik beträgt vorzugsweise wenigstens 60 Gew.-% und vorzugsweise höchstens 76 Gew.-%. Der Phasenanteil der Keimbildner-Mischkristallphasen beträgt 3 Gew.-%. Für den Anteil der Restglasphase ist der bevorzugte Bereich 21 bis 37 Gew.-%. Durch die erfindungsgemäße Bedingung B1 für den Gehalt der Restglasbildner wird dieser Phasenanteil der Restglasphase eingestellt. Diese Phasenanteile sind vorteilhaft, um geringe Streuung und die gewünschten mechanischen und thermischen Eigenschaften der Glaskeramik zu erhalten.

Für eine 4 mm dicke transparente Glaskeramik ist die Helligkeit (brightness) Y vorzugsweise größer als 84 %, bevorzugt größer als 85 % und besonders bevorzugt größer als 86 %.

Die Farbe (Buntheit c*) beträgt vorzugsweise höchstens 3, bevorzugt weniger als 2,8, weiter bevorzugt weniger als 2,5 und besonders bevorzugt weniger als 2.

Die Werte Helligkeit und Farbe gelten für die Messung mit Normlicht D65, 2° an 4 mm dicken polierten Proben gemäß der Norm DIN 5033.

In einer bevorzugten Ausbildung der Glaskeramik wird die Farbe (Buntheit c*) durch Zusätze von $Nd_2O_3$ und optional auch zusätzlich CoO verringert. Durch die wenn auch geringe Absorption durch $Nd_2O_3$, bzw. CoO, wird die Helligkeit verringert. Dies ist visuell weniger auffällig, da ein leichter Graustich weniger wahrgenommen wird als eine Einfärbung.

Die transparente Glaskeramik mit Hochquarz-Mischkristalle als Hauptkristallphase ist bevorzugt dadurch gekennzeichnet, dass die Glaskeramik nach Durchtritt von Licht der Normlichtart D65 bei 4 mm Dicke eine Buntheit c* im CIELAB - Farbsystem aufweist, wobei die Helligkeit Y im CIE Farbsystem der folgenden Beziehung genügt:

$$Y^* \geq d \cdot c^* + e$$

mit d = 1,83, mit e ≥ 84,4 und mit 0 ≤ c* ≤ 3.

Legt man für die Helligkeit das CIELAB-Farbsystem zugrunde ergibt sich für die Helligkeit L* die folgende Beziehung:

$$L^* \geq a \cdot c^* + b$$

mit a = 0,765, mit b ≥ 93,5 und mit 0 ≤ c* ≤ 3.

Bevorzugte Werte sind a = 0,765 und b = 93,5. Ein bevorzugter Bereich ist 93,5 ≤ b ≤ 94,4.

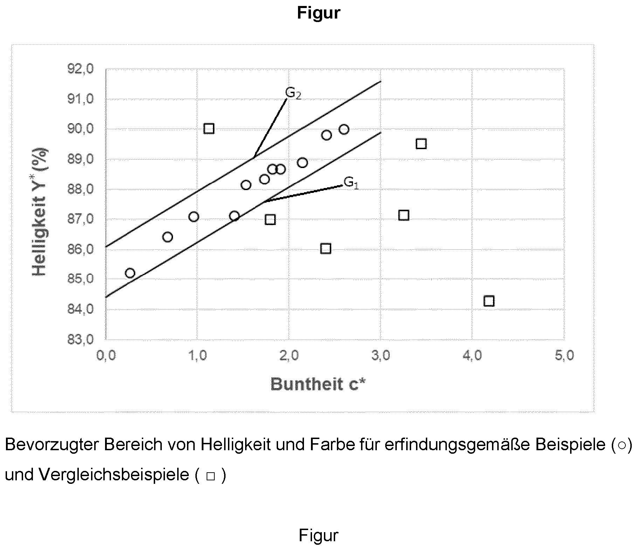

Die untere Grenzgerade in der Figur zeigt den Vorteil gegenüber anderen transparenten Glaskeramiken mit $TiO_2$ als Keimbildner gemäß dem Stand der Technik. Glaskeramiken ohne $TiO_2$ oder mit sehr geringen Gehalten können bessere Werte erreichen, so z.B. die Vergleichsglaskeramik Beispiel 16 mit reiner $ZrO_2$-Keimbildung, jedoch ergeben sich dabei die beschriebenen Fertigungsnachteile bei der Schmelze, Entglasung und Keramisierung.

Da die erfindungsgemäßen Glaskeramiken für günstige Fertigungseigenschaften vorzugsweise mehr als 1,6 Gew.-% $TiO_2$ erhalten, resultiert auch eine obere Grenzgerade für die im Rahmen der Erfindung erreichbaren Werte von Helligkeit und Farbe. Diese wird abgeschätzt mit den Beziehungen:

$$Y^* \leq d \cdot c^* + e$$

mit d = 1,83, mit e ≤ 86,1 und mit 0 ≤ c* ≤ 3.

Beziehungsweise:

$$L^* \leq a \cdot c^* + b$$

mit a = 0,765, mit b ≤ 94,4 und mit 0 ≤ c* ≤ 3.

Die Merkmale der erfindungsgemäßen Glaskeramik beruhen vorzugsweise auf der Kombination einer definierten Zusammensetzung, die der des Grünglases entspricht, aus dem sie entstanden ist, mit einer angepassten schnellen Keramisierung mit einer Gesamtdauer von weniger als 300 Minuten, wie sie mit dem erfindungsgemäßen Verfahren und in den Beispielen beschrieben wird.

Die thermische Ausdehnung der Glaskeramik wird bevorzugt in einem Temperaturbereich zwischen Raumtemperatur und 700 °C auf Werte um $0 \pm 0{,}5 \cdot 10^{-6}/K$ eingestellt.

In einer anderen Ausführungsform enthält die Glaskeramik Keatit-Mischkristalle als Hauptkristallphase. Aus wirtschaftlichen Gründen ist es vorteilhaft, wenn aus der gleichen Zusammensetzung des kristallisierbaren Lithiumaluminiumsilikat-Glases sowohl transparente Glaskeramiken mit Hochquarz-Mischkristallen als Hauptkristallphase als auch Glaskeramiken mit Keatit-Mischkristallen als Hauptkristallphase hergestellt werden können. Durch die Ausgestaltung des Keramisierungsprogramms, insbesondere durch die Wahl von Maximaltemperatur und Haltezeit, lässt sich bei letzteren das Aussehen von transparent über transluzent bis opak einstellen.

Die Begriffe opak, transluzent und transparent werden aus Sicht der Anwendung hinsichtlich der Anzeigefähigkeit von LED durch den Glaskeramikartikel verstanden. Opazität wird bei einer Helligkeit Y der Glaskeramikplatte von weniger als 2 % in Transmission definiert, da die Anzeigefähigkeit nicht zufriedenstellend ist. Der Bereich höherer Helligkeit aber mit sichtbarer Streuung mit haze-Werten oberhalb 2,5 % wird als transluzent betrachtet.

Die mittlere Kristallitgröße ist bevorzugt größer als 60 nm. Der Kristallphasenanteil beträgt mehr als 60 Gew.-% und bevorzugt mehr als 80 Gew.-%. Durch die unterschiedlichen Eigenschaftskombinationen der beiden Glaskeramik-Ausführungen wird eine Vielzahl von Anwendungen wirtschaftlich vorteilhaft bedient.

Die bevorzugte Geometrie für die erfindungsgemäßen Glaskeramiken bzw. die daraus hergestellten Artikel ist in Form von Platten. Die Glaskeramik liegt vorzugweise in Form einer Platte mit vorzugsweise einer Dicke von 2 mm bis 20 mm vor.

Damit erschließen sich wichtige Anwendungen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher bevorzugt bei maximal 6 mm gewählt.

Der bevorzugte erfindungsgemäße Artikel ist eine gewalzte Glaskeramikplatte.

Die maximale Flächengröße der Artikel wird bei der Herstellung durch die Bandbreite bei der Heißformgebung (Walzen bzw. Floaten) und die Größe der Keramisierungsöfen limitiert. Für bestimmte Anwendungen wie Brandschutzgläser oder Küchenarbeitstische mit integrierten Kochzonen sind Dimensionen mit Kantenlängen bis zu 3 m bevorzugt, da diese Größe die Geschosshöhe bei Fenstern und Kochflächen in Großküchen erfüllt.

Die Glaskeramikplatte und die vorzugsweise daraus hergestellten Artikel können dabei nicht nur eben ausgeformt sein, sondern auch dreidimensional verformt sein. Beispielsweise können abgekantete, gewinkelte oder gewölbte Platten verwendet werden. Die Platten können rechtwinklig oder in anderen Formen vorliegen sowie neben ebenen Bereichen dreidimensional verformte Bereiche wie z.B. Woks oder eingewalzte Stege oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner, Infrarotstrahler, Laserbestrahlung oder durch Schwerkraftsenken, vorgenommen. Beim Keramisieren wird mit unterstützenden keramischen Formen, z. B. ebenen Unterlagen gearbeitet, um unkontrollierte Änderungen der geometrischen Form zu vermeiden. Eine nachträgliche Politur einer oder beider Seiten ist optional möglich, wenn es die Anwendung erfordert.

Herstellungsverfahren des Glases

Das erfindungsgemäße Verfahren zur Herstellung des kristallisierbaren Lithiumaluminiumsilikat-Glases ist gekennzeichnet durch die Schritte:

a) Bereitstellen eines Gemengesatzes aus technischen Rohstoffen, beinhaltend pulverförmige Gemengeanteile und 20 bis 80 Gew.-% Scherben;
b) Schmelzen des Gemengesatzes und Läutern bei Temperaturen größer als 1600 °C;
c) Abkühlen der Glasschmelze und Formgebung bei Temperaturen in der Nähe der Verarbeitungstemperatur $V_A$; und
d) Abkühlen in einem Entspannungsofen auf Raumtemperatur, wobei unerwünschte Spannungen im Glas entfernt werden.

Unter Raumtemperatur werden 20 °C verstanden.

Der Gemengesatz ist so ausgebildet, dass nach der Schmelze Gläser mit den erfindungsgemäßen Zusammensetzungen und Eigenschaften entstehen. Durch einen bevorzugten Scherbenzusatz von 20 bis 80 Gew.-% im Gemengesatz wird das Einschmelzen begünstigt, und es lassen sich höhere Wannendurchsätze erhalten. Es wird bei einer maximalen Temperatur von größer als 1600 °C, bevorzugt größer als 1650 °C geschmolzen und geläutert. Besonders bevorzugt wird ein Hochtemperatur-Läuteraggregat eingesetzt und die maximale Temperatur der Glasschmelze in der Schmelzwanne beträgt mehr als 1750°C, bevorzugt mehr als 1850°C. Der Einsatz elektrischer Energie über eine zusätzliche Hochtemperaturläuterung ermöglicht es, umweltfreundlich hergestellte elektrische Energie einzusetzen. Damit können Forderungen an einen Schmelzprozess mit $CO_2$-Verminderung besser erfüllt werden.

Bei der Formgebung wird bevorzugt ein Glasband mit plattenförmiger Geometrie über Walzen hergestellt und zur Vermeidung von Spannungen in einem Kühlofen auf Raumtemperatur abgekühlt. Aus diesem Glasband werden nach Sicherstellung der Qualität hinsichtlich von Volumen- und Oberflächendefekten Platten der gewünschten Größe hergestellt.

Für eine wirtschaftliche Herstellung ist eine niedrige Schmelztemperatur vorteilhaft und wird durch eine niedrigere Viskosität der Glasschmelze bei hohen Temperaturen sichergestellt. Hierfür ist die Temperatur, bei der die Viskosität der Glasschmelze $10^2$ dPas beträgt, eine charakteristische Größe. Diese sogenannte $10^2$ dPas-Temperatur liegt für die erfindungsgemäßen Gläser vorzugsweise bei weniger als 1760 °C, bevorzugt weniger als 1755 °C und besonders bevorzugt weniger als 1750 °C. Die niedrige Viskosität der Glasschmelze bei hohen Temperaturen erlaubt es, die Temperatur in der Schmelzwanne niedriger einzustellen und verlängert damit die Lebensdauer der Schmelzwanne. Der Energieverbrauch bezogen auf die Menge der hergestellten Glaskeramik wird vermindert. Da eine niedrige Glasviskosität auch den Aufstieg von Blasen und damit die Läuterung begünstigt, ist eine niedrige Glasviskosität auch vorteilhaft für die Blasenqualität.

Es ist wirtschaftlich vorteilhaft, die Temperatur bei der Formgebung abzusenken. Die Standzeiten der Formgebungswerkzeuge werden erhöht, und es fällt weniger abzuführende Verlustwärme an. Die Formgebung, meist durch Walzen oder Floaten, findet bei einer Viskosität der Glasschmelze von $10^4$ dPas statt. Diese Temperatur wird auch als Verarbeitungstemperatur $V_A$ bezeichnet und liegt für die erfindungsgemäßen Gläser vorzugsweise bei höchstens 1330 °C, bevorzugt bei höchstens 1325 °C.

Das kristallisierbare Glas verfügt bei der Formgebung aus der Schmelze über eine ausreichende Entglasungsfestigkeit. Bei der Formgebung im Kontakt mit dem Formgebungsmaterial (z. B. Edelmetall bei der Ziehdüse im Walzprozess) bilden sich im Glas keine für die Festigkeit der Glaskeramik kritischen und visuell auffälligen Kristalle. Die Grenztemperatur, unterhalb der es zu kritischen Entglasungen kommt, d.h. die obere Entglasungsgrenze (OEG), liegt vorzugsweise mindestens 15 °C unter der Verarbeitungstemperatur $V_A$ A. Bei dieser Mindestdifferenz wird für den Formgebungsprozess ein ausreichendes Prozessfenster definiert. Besonders vorteilhaft ist ein Prozessfenster $V_A$ - OEG, das mindestens 20 °C beträgt. Die Differenz der Temperaturen $V_A$ - OEG ist also ein Maß für die Entglasungsfestigkeit.

Geeignete Formgebungsverfahren für die plattenförmige Geometrie sind insbesondere Walzen und Floaten. Bevorzugtes Formgebungsverfahren aus der Glasschmelze ist ein Verfahren über zwei Walzen, da dieses Verfahren wegen der schnelleren Abkühlung Vorteile hat, wenn die Zusammensetzungen zu Entglasungen neigen.

Keramisierungsverfahren

Der nächste Prozessschritt ist die Keramisierung auf ebenen oder dreidimensional geformten, hochtemperaturstabilen Unterlagen (Brennhilfsmitteln). Bevorzugt wird die Keramisierung in einem Rollenofen durchgeführt.

Das erfindungsgemäße Verfahren zur Herstellung einer Glaskeramik ist dadurch gekennzeichnet, dass die Keramisierung mit folgenden Verfahrensschritten in der folgenden Reihenfolge durchgeführt wird:

a) Erhöhen der Temperatur des kristallisierbaren Glases auf eine Temperatur $T_a$ im Bereich von 680 °C bis 730 °C innerhalb von 3 bis 60 Minuten;
b) Erhöhen der Temperatur des kristallisierbaren Glases innerhalb des Temperaturbereichs der Keimbildung von der Temperatur $T_a$ bis 800 °C über einen Zeitraum von 10 bis 100 Minuten;
c) Erhöhen der Temperatur des Kristallisationskeime enthaltenden Glases innerhalb von 5 bis 80 Minuten Dauer in den Temperaturbereich hoher Kristallwachstumsgeschwindigkeit von 850 °C bis 950 °C;
d) Halten innerhalb des Temperaturbereiches bei der maximalen Temperatur von 850 °C bis 950 °C über 0 bis zu 60 Minuten, wobei Kristalle des Typs Hochquarz-Mischkristalle auf den Kristallisationskeimen wachsen,
e) rasches Abkühlen der erhaltenen Glaskeramik auf Raumtemperatur in weniger als 150 Minuten,

wobei die Keramisierung des Glases eine Gesamtdauer von weniger als 300 min aufweist.

Vorzugsweise liegt die Haltezeit im Verfahrensschritt d) bei 1 bis 60 Minuten.

Die erforderlichen hohen Heizraten können großtechnisch in Rollenöfen realisiert werden. Der Temperaturbereich von 680 °C bis 730 °C entspricht in etwa der Transformationstemperatur des Glases. Oberhalb der Temperatur von 730 °C bis 800 °C liegt der Bereich mit hohen Keimbildungsraten wobei das Maximum der Keimbildungsrate bei 750 °C bis 760 °C liegt.

Der Temperaturbereich der Keimbildung von $T_a$ bis 800 °C wird über einen Zeitraum von 10 Minuten bis 100 Minuten durchfahren. Danach wird die Temperatur des Kristallisationskeime enthaltenden Glases innerhalb von 5 Minuten bis 80 Minuten auf eine Temperatur von 850 °C bis 950 °C erhöht, die sich durch hohe Kristallwachstumsgeschwindigkeiten der Hochquarz-Mischkristallphase auszeichnet. Diese maximale Temperatur wird für 0 bis 60 min gehalten. Dabei wird das Gefüge der Glaskeramik homogenisiert und die optischen, physikalischen und chemischen Eigenschaften eingestellt.

Die erhaltene Glaskeramik wird danach in weniger als 150 Minuten und mehr als 10 min auf Raumtemperatur rasch abgekühlt.

Insgesamt beträgt die Keramisierungszeit weniger als 300 Minuten, bevorzugt weniger als 200 Minuten und besonders bevorzugt weniger als 150 Minuten.

Darüber hinaus erfüllt die aus dem kristallisierbaren Glas hergestellte transparente LAS-Glaskeramik bestimmte Eigenschaften. Die Helligkeit Y soll hoch sein, und die Buntheit c* soll gering sein, damit die Durchsicht auf Gegenstände oder auf eine Unterseitenbeschichtung sowie die Ansicht von Anzeigen nicht verdunkelt oder im Farbton verfälscht wird. Die transparente Glaskeramik soll ohne visuell störende Lichtstreuung sein, damit Durchsicht und die Anzeigen klar sind und nicht gestört werden. Dies soll auch bei den angestrebten kurzen Keramisierungszeiten gewährleistet sein.

Die Gehalte der für die Bildung von Kristallphasen und Restglas verantwortlichen Komponenten sind so optimiert, dass hohe Werte der Helligkeit, geringe Farbe und geringe Streuung auch bei kurzen Keramisierungszeiten erreicht werden. Unter kurzer Keramisierungszeit wird verstanden, dass die Glaskeramik in einer Zeit von weniger als 300 Minuten, bevorzugt weniger als 150 Minuten und besonders bevorzugt weniger als 100 Minuten aus dem kristallisierbaren LAS-Glas hergestellt ist.

In diesen bevorzugten Bereichen in Verbindung mit den weiter spezifizierten Zusammensetzungsbereichen stellt sich der gewünschte Effekt einer Minimierung der Farbe, Erhöhung der Helligkeit und günstigen Fertigungseigenschaften wie Minimierung der Lichtstreuung bei schneller Keramisierung verknüpft mit niedriger Schmelz- und Verarbeitungstemperatur $V_A$ besonders vorteilhaft ein.

Verwendung der Glaskeramik

Vorzugsweise findet die transparente Lithiumaluminiumsilikat-Glaskeramik mit Hochquarz-Mischkristallen als Hauptkristallphase Verwendung als Brandschutzglas, Kaminsichtscheibe, Backofensichtscheibe, die insbesondere für Pyrolyseherde verwendet wird, Kochfläche, die eine Unterseitenbeschichtung aufweisen kann, Abdeckung im Beleuchtungssektor, Sicherheitsglasscheibe, die vorzugsweise im Laminatverbund verwendet wird, Trägerplatte oder Ofenauskleidung, die vorzugsweise in thermischen Prozessen zum Einsatz kommt.

Bei Kaminsichtscheiben wird eine gute Durchsicht auf den Brennraum und die Flammen gewünscht. Bei Kochflächen mit farbiger Unterseitenbeschichtung soll die Farbe der Unterseitenbeschichtung nicht durch die Farbe der Glaskeramik verfälscht werden. Für die genannten Verwendungen sind die erfindungsgemäßen hohe Werte der Helligkeit (brightness) Y und die geringe Buntheit c* in Verbindung mit der geringen unauffälligen Lichtstreuung bevorzugt.

Durch Aufbringen einer blickdichten Beschichtung auf Ober- und/oder Unterseite lässt sich aus der transparenten Glaskeramik eine farbige Kochfläche mit der geforderten visuellen Abdeckung herstellen und der Einblick in die technischen Einbauten unter der Kochfläche verhindern. Die Beheizung der Kochfläche erfolgt wie üblich mit Gasbrennern, Strahlungsheizungen oder induktiv.

Aussparungen in der Beschichtung erlauben das Anbringen von Sensorbereichen, farbigen und weißen Anzeigenvorrichtungen sowie Displays.

Es ist möglich, Beschichtungen auf Ober- und Unterseite der transparenten Glaskeramikplatte zu kombinieren und dabei auch teiltransparente Schichten einzubeziehen. Ebenso können Markierungen, z. B. für Kochzonen, aufgebracht werden. Dabei sind die bekannten verschiedenen Arten von Beschichtungen wie z. B. mit organischen oder anorganischen Dekorfarben, Lüsterfarben, Silikon- und Sol-Gelbasierten Farben, gesputterten Schichten, metallischen Schichten, Oxinitrid-, Oxicarbid-Schichten und so weiter kombinierbar. Die Schichten können auch übereinander aufgebracht werden.

Die Vorteile der erfindungsgemäßen transparenten Glaskeramik hinsichtlich ihrer geringen Buntheit c* und hohen Helligkeit Y gemäß dem bevorzugten Wertebereich von der Figur kommen bei Kochflächen mit Unterseitenbeschichtung besonders dann zum Tragen, wenn es sich um weiße, allgemein helle Unterseitenbeschichtungen handelt. Bevorzugt sind helle Unterseitenbeschichtungen, die bei direkter Messung mit Normlicht D65, 2° in Remission eine Helligkeit L* von größer als 50, weiter bevorzugt größer als 70 haben und eine Buntheit c* von weniger als 13, bevorzugt weniger als 10. Bevorzugte Verwendung ist daher eine Kochfläche mit Induktionsbeheizung mit einer Glaskeramikplatte mit den erfindungsgemäßen Werten für Buntheit c* und Helligkeit Y gemäß der Figur und einer Unterseitenbeschichtung mit L* > 50 und Buntheit c* < 13.

Auch bei Kamin- oder Ofensichtscheiben können Beschichtungen, wie z. B. zur blickdichten Abdeckung am Rand der Scheiben, gewünscht sein. Die Anordnung der Beschichtungen auf Ober- bzw. Unterseite der Glaskeramikplatte wird nach den ästhetischen und den spezifischen Anforderungen an chemische und physikalische Eigenschaften vorgenommen.

Die Anzeigenvorrichtungen bestehen aus Licht emittierenden elektronischen Bauteilen, wie z. B. aus Leuchtdioden, OLEDs, LCDs oder Fluoreszenzanzeigen. Es sind alle Formen von Anzeigen, punktuelle wie flächige, einschließlich 7-Segment Displays, möglich. Die Emissionsspektren der strahlenden Anzeigen können ein oder mehrere Maxima und breite Bereiche haben, so dass die Anzeigen farbig (wie z. B. blau, purpur, rot, grün, gelb, orange) oder weiß erscheinen. Aufgrund der geringen Farbe der Glaskeramik können auch schwarz-weiße und farbige Displays oder Bildschirme ohne störende Farbverfälschung hergestellt werden. Die Farbe der Displays wird optional durch auf der Unterseite aufgebrachte Farbfilter oder Farbschichten verändert. Der Farbton der Anzeigen kann dadurch beeinflusst und ggf. auch korrigiert werden, wenn er durch die Glaskeramik verändert wird. Ebenso können Kontroll-, Sensor- und Steuerungs-/Bedienungselemente, wie z. B. solche des kapazitiven oder induktiven Typs, an der Glaskeramikplatte angebracht werden.

Einige Verwendungen werden alternativ auch durch eine transluzente oder opake Lithiumaluminiumsilikat-Glaskeramik mit Keatit-Mischkristallen als Hauptkristallphase realisiert. In transluzenter oder opaker Form ist die Verwendung als Kochfläche, Trägerplatte für thermische Prozesse (setter plate), Abdeckplatte in Mikrowellenherden oder Wärmestrahlern sowie Auskleidung von Brennräumen bevorzugt. Dabei beträgt die Helligkeit Y bevorzugt weniger als 30%.

Weitere bevorzugte Verwendungen für beide Glaskeramiken, seien sie mit Hochquarz- oder mit Keatit-Mischkristallen als Hauptkristallphase, sind die als Trägerplatte oder Ofenauskleidung. In der Keramik-, Solar- oder Pharmaindustrie oder der Medizintechnik eignen sie sich insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung. Weiter finden sie Verwendung als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch-, Grill- oder Bratfläche, als weiße Ware, als Heizkörperabdeckung, als Wafersubstrat, als Gegenstand mit UV-Schutz, als Fassadenplatte oder als Material für Gehäusekomponenten beispielsweise von elektronischen Geräten und/oder Abdeckgläser für IT wie Mobiltelefone, Laptops, Scannergläser oder als Komponente für ballistischen Schutz.

Die vorliegende Erfindung wird anhand der folgenden Beispiele verdeutlicht.

Die Figur zeigt den bevorzugten Bereich für Helligkeit Y* und Buntheit c* für die erfindungsgemäßen Beispiele und Vergleichsbeispiele von Glaskeramiken.

Für die Grenzgeraden $G_1$ und $G_2$ gilt:

$$G_1: Y^* = 1{,}83 \cdot c^* + 84{,}4$$

$$G_2: Y^* = 1{,}83 \cdot c^* + 86{,}1$$

Die Tabelle 1 enthält Zusammensetzungen und Eigenschaften von erfindungsgemäßen kristallisierbaren LAS-Gläsern und Vergleichsgläsern. Tabelle 2 zeigt die Eigenschaften der kristallisierbaren Gläser nach Umwandlung in die transparente Glaskeramik mit Hochquarz-Mischkristallen als Hauptkristallphase. Tabelle 3 zeigt die Eigenschaften nach Umwandlung in die Glaskeramik mit Keatit-Mischkristallen als Hauptkristallphase.

Die erfindungsgemäßen kristallisierbaren LAS-Gläser 1 bis 11 und die Vergleichsgläser 12 bis 17 wurden aus in der Glasindustrie üblichen Gemengerohstoffen bei Temperaturen von 1620 °C, 4 Stunden eingeschmolzen.

Als Gemengerohstoffe wurden wahlweise ausgewählt: Lithiumkarbonat, Aluminiumoxid, Aluminiumhydroxid, Aluminiummetaphosphat, Quarzsand, Natron- und Kalisalpeter, Natrium- und Kaliumcarbonat, Magnesiumoxid, Kalk, Dolomit, Strontiumcarbonat, Bariumcarbonat, Zinkoxid, Arsenoxid oder eine andere Arsen-haltige Verbindung, Titanoxid, Zirkonsilikat, Zirkonoxid, optional Neodymoxid, optional Kobaltoxid, optional Zinnoxid.

Als Hauptrohstoffe und technische Rohstoffe für die Einführung des $Li_2O$ werden bevorzugt solche eingesetzt, die weniger als 150 ppm $Fe_2O_3$ enthalten wie Quarz, Aluminiumoxid, Aluminiumhydroxid, Lithiumcarbonat. Mit dieser Wahl lassen sich die Forderungen nach wirtschaftlichen Rohstoffen und einem geringen Verunreinigungsgehalt färbender Verbindungen von Fe, Ni, Cr, V, Cu, Mo, S vereinbaren.

Nach dem Einschmelzen des Gemenges in Tiegeln aus gesintertem Kieselglas wurden die Laborschmelzen in Pt/Rh-Tiegel mit Innentiegel aus Kieselglas umgegossen und bei Temperaturen von 1600 °C, 60 Minuten durch Rühren homogenisiert. Nach dieser Homogenisierung wurden die Gläser für 3 Stunden bei 1640 °C geläutert.

Anschließend wurden Stücke von ca. 120 x 140 x 30 mm³ Größe gegossen und in einem Kühlofen beginnend ab 660 °C auf Raumtemperatur abgekühlt, um Spannungen abzubauen. Die Gussstücke wurden in die für die Untersuchungen und für die Keramisierung benötigten Größen unterteilt.

In Tabelle 1 sind Zusammensetzungen und Eigenschaften der kristallisierbaren Gläser aufgeführt. Neben den Gehalten der Komponenten sind auch die relevanten Komponentenbeziehungen dargestellt. Dabei handelt es sich bei den Gläsern 1 bis 11 um erfindungsgemäße Gläser, also Ausführungsbeispiele, und bei den Gläsern 12 bis 17 um Vergleichsgläser. Die Zusammensetzungen der Vergleichsgläser sind außerhalb der Erfindung und zeigen die beschriebenen Nachteile bei den Fertigungseigenschaften (Schmelz-, Verarbeitungstemperatur, Entglasungsfestigkeit, Walzbelag) und/oder der Farbe, Helligkeit, Streuung nach Umwandlung in die Glaskeramik. Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt, sind F, Cl, B, Mn, Rb, Cs, Hf, die üblicherweise weniger als 0,2 Gew.-% betragen. Sie werden oft über die Rohstoffe für die verwandten Komponenten eingeschleppt, so z.B. Rb und Cs über die Na-, bzw. K- Rohstoffe, oder Hf über den Zr-Rohstoff.

Der mit IR-Spektroskopie gemessene Wassergehalt der kristallisierbaren Gläser ist in Tabelle 1 angegeben.

In Tabelle 1 sind auch die Eigenschaften im glasigen Zustand Transformationstemperatur Tg [°C], Verarbeitungstemperatur $V_A$ [°C], $10^2$ dPas-Temperatur [°C], obere Entglasungsgrenze OEG [°C] und Entglasungsfestigkeit $V_A$ - OEG aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die höchste Temperatur, bei der die ersten Kristalle an der Kontaktfläche der Glasschmelze zur Tiegelwand auftreten, bestimmt die OEG-Temperatur.

Die Tabelle 2 betrifft die aus den Gläsern der Tabelle 1 hergestellten Glaskeramiken mit Hochquarz-Mischkristallen als Hauptkristallphase. Dabei handelt es sich bei den Beispielen 1 bis 11 um Ausführungsbeispiele und bei den Beispielen 12 bis 17 um Vergleichsbeispiele.

In Tabelle 2 sind die Eigenschaften der Glaskeramiken, nämlich spektrale Transmission [%] bei 400 nm, Infrarottransmission [%] bei 1600 nm, thermische Ausdehnung zwischen 20 °C und 700°C [$10^{-6}$/K], und der mittels Röntgenbeugung gemessener Phasengehalt [Gew.-%] der Hauptkristallphase, bestehend aus Hochquarz-Mischkristallen, der Phasengehalt der Restglasphase, sowie die mittlere Kristallitgröße [nm] aufgezeigt. In der Tabelle 2 sind auch die Helligkeit Y aus dem CIE-Farbsystem und die Helligkeit L* sowie die Farbkoordinaten a*, b* aus dem CIELAB-System mit der Größe c* als Maß für die Farbe (Buntheit) sowie der haze-Wert als Maß für die Streuung angegeben.

Die Beispiele 1 bis 15 sind nach dem angegebenen Keramisierungsprogramm 1 umgewandelt. Die Vergleichsbeispiele 12 und 13 zeigen die Nachteile bei Farbe und Helligkeit für die nicht erfindungsgemäßen Zusammensetzungen. Vergleichsbeispiel 14 ist ohne $As_2O_3$ und dafür mit $SnO_2$ geläutert. Vergleichsbeispiel 15 hat $SnO_2$ als Hauptläutermittel und geringe Anteile von $As_2O_3$. Bei der erreichten Buntheit c* von 2,4 bzw. 4,2 durch $Nd_2O_3$-Zusatz zeigen sich die Nachteile hinsichtlich der Helligkeit gegenüber erfindungsgemäßen Beispielen vergleichbarer Buntheit mit $As_2O_3$-Zusatz.

Das Vergleichsbeispiel 16 entspricht dem Beispiel 1 aus Tabelle 2 in der im Stand der Technik diskutierten Schrift EP 1 837 312 A und ist wie darin angegeben kristallisiert.

Bei dem Vergleichsbeispiel 17 handelt es sich um eines mit reiner $ZrO_2$-Keimbildung. Dieses Beispiel entspricht dem Zusammensetzungsbereich, der in der JP 05-193985 beschrieben wird. Wie beschrieben erfordert die $ZrO_2$-Keimbildung längere Keramisierungszeiten. Bei diesem Keramisierungsprogramm 2 wurde das Vergleichsbeispiel 17, wie in der JP 05-193985 beschrieben, in einem Labor-Kammerofen mit 5 °C/min auf 790 °C aufgeheizt und bei dieser Temperatur für 3 Stunden gehalten. Anschließend wurde mit 5 °C/min weiter auf 960 °C erwärmt und für 2 Stunden gehalten. Die Abkühlung erfolgte im Ofen mit Ofenkennlinie auf Raumtemperatur. Bei diesem Vergleichsbeispiel zeigen sich die Vorteile der $ZrO_2$-Keimbildung bei Farbe und Helligkeit (Tabelle 2 und Figur), aber die gravierenden Nachteile bei den Fertigungseigenschaften des Ausgangsglases 17 (Tabelle 1).

Tabelle 3 zeigt die Beispiele 18 bis 25 für die aus den angegebenen Gläsern der Tabelle 1 hergestellten Glaskeramiken mit Keatit-Mischkristallen als Hauptkristallphase. Neben den Transmissionswerten sind zusätzlich auch die Farbwerte für die Messung in Remission dargestellt. Weiter ist qualitativ das Aussehen der Beispiele beschrieben. Die Vergleichsbeispiele 24 und 25 zeigen bei vergleichbaren Werten für L* in Remission Nachteile hinsichtlich geringerer Helligkeit Y in Transmission.

Keramisierungsprogramm 1

Bei dem Keramisierungsprogramm 1 wird in einem Laborofen, der hohe Heizraten ermöglicht in 24 min auf 715 °C aufgeheizt. In dem Temperaturbereich von 715 °C bis 800 °C wird die Heizrate für ausreichende Keimbildung verringert, damit keine visuell störende Streuung auftritt. Oberhalb 800 °C bis 819 °C wird die Heizrate zunächst verringert, da in diesem Bereich die Kristallisation der Hochquarz-Mischkristalle stattfindet. Der damit einhergehende Schrumpfungsprozess darf nicht zu schnell ablaufen, da es sonst zu Unebenheiten des Artikels kommen kann. Oberhalb 819 °C wird die Heizrate erhöht. In diesem Temperaturbereich ist die Bildung der störenden Fe/Ti- Farbkomplexe verstärkt. Die Gesamtzeit von 800 °C bis Erreichen der Maximaltemperatur 895 °C beträgt 76 min, mit anschließender Haltezeit 4 min. Bei der Maximaltemperatur wird die Zusammensetzung von Kristallen und Restglas eingestellt und die Mikrostruktur homogenisiert. Dabei werden die chemischen und physikalischen Eigenschaften der Glaskeramik eingestellt. Das Abkühlen erfolgt bis 800 °C gesteuert, dann wird die Probe auf Raumtemperatur durch Öffnen der Ofentür abgeschreckt; im Detail:
Keramisierungsprogramm 1, (Keramisierungszeit 89 min):

a) schnelles Aufheizen von Raumtemperatur auf 715 °C in 24 min,
b) Temperaturerhöhung von 715 °C bis 800 °C in 19 min (Heizrate 4,5 °C/min),
c) Temperaturerhöhung von 800 auf 885 °C innerhalb von 27 min, dabei Aufheizen von 800 auf 819 °C in 18 min (Heizrate 1,1 °C/min), weiteres Aufheizen mit 8°C/min auf 885°C in 9 min (Heizrate 7,3 °C/min);
d) Weitere Temperaturerhöhung von 885 °C 895 °C in 6 min (Heizrate 1,7 °C/min), Haltezeit von 4 min bei Maximaltemperatur 895°C,
e) Abkühlen innerhalb von 9 min auf 800 °C (mit 10,6 °C/min, dann schnelle Abkühlung auf Raumtemperatur.

Mit einem zusätzlichen Keramisierungsprogramm 3 erfolgte die Umwandlung der kristallisierbaren Gläser (Tabelle 1) in Glaskeramiken mit Keatit-Mischkristallen als Hauptkristallphase. Bei diesem Programm wurde bis 895 °C wie bei Programm 1 verfahren, Dann wurde abweichend von Programm 1 ohne Haltezeit bei 895 °C mit einer Heizrate von 21 °C/min auf eine Maximaltemperatur $T_{max}$ mit Haltezeit $t_{max}$ erhitzt (Angaben siehe Tabelle 3). Von der Maximaltemperatur wurde mit 10 °C/min auf 800 °C abgekühlt und dann schnell auf Raumtemperatur abgekühlt.

Die Transmissionsmessungen wurden an polierten Platten der Dicke 4 mm mit Normlicht D65, 2° mit dem Gerät Perkin-Elmer Lambda 900 durchgeführt. Aus den gemessenen spektralen Werten im Bereich zwischen 380 nm und 780 nm, der das sichtbare Lichtspektrum repräsentiert, wird die Helligkeit Y nach DIN 5033 für die gewählte Normlichtart D65 und Beobachterwinkel 2° berechnet.

Aus diesen Messungen werden ebenfalls die Helligkeit L* und die Farbkoordinaten a*, b* aus dem CIELAB-System und die Buntheit c* berechnet. Auch die Messung der Remission erfolgte nach DIN 5033 mit diesen Parametern. Die Größe L* in Remission korreliert mit dem Weißeindruck der Glaskeramik.

Die Streuung der Glaskeramiken wird durch Messung der Trübung (engl. haze) bestimmt. Dabei wird die Trübung mit Normlicht C an beidseitig polierten 4 mm dicken Platten mit einem kommerziellen Messgerät "haze-guard plus" der Firma BYK-Gardner gemäß der Norm ASTM D1003-13 gemessen und durch den haze-Wert charakterisiert.

Als typische Verunreinigungen wurden analysiert: 0,04 Gew.-% $HfO_2$, 8 ppm $As_2O_3$, 1 ppm $Cr_2O_3$, 1 ppm CuO, 3 ppm $MnO_2$, 4 ppm $MoO_3$, 1 ppm NiO, 3 ppm $V_2O_5$.

Tabelle 1: Zusammensetzungen und Eigenschaften kristallisierbarer Gläser

| Glas Nr. | | 1 | 2 | 3 | 4 | 5 | 6 |
|---|---|---|---|---|---|---|---|
| **Zusammensetzung** | Gew.-% | | | | | | |
| $Li_2O$ | | 3,60 | 3,66 | 3,68 | 3,62 | 3,63 | 3,60 |
| $Na_2O$ | | 0,51 | 0,52 | 0,52 | 0,52 | 0,53 | 0,65 |
| $K_2O$ | | 0,16 | 0,20 | 0,20 | 0,20 | 0,20 | 0,12 |
| MgO | | 0,28 | 0,27 | 0,27 | 0,27 | 0,27 | 0,18 |
| CaO | | 0,40 | 0,34 | 0,34 | 0,34 | 0,35 | 0,04 |
| SrO | | 0,05 | 0,05 | 0,05 | 0,05 | 0,05 | 0,19 |
| BaO | | 0,92 | 0,93 | 0,93 | 0,93 | 0,93 | 1,45 |
| ZnO | | 1,77 | 1,83 | 1,84 | 1,81 | 1,80 | 1,85 |
| $Al_2O_3$ | | 21,45 | 21,28 | 21,23 | 21,25 | 21,28 | 21,67 |
| $SiO_2$ | | 65,75 | 65,70 | 65,60 | 65,70 | 65,70 | 65,10 |
| $TiO_2$ | | 2,35 | 2,39 | 2,40 | 2,39 | 2,40 | 2,45 |
| $ZrO_2$ | | 1,81 | 1,82 | 1,82 | 1,82 | 1,82 | 1,75 |
| $P_2O_5$ | | 0,03 | 0,028 | 0,028 | 0,030 | 0,030 | |
| $SnO_2$ | | | | | | | |
| $Fe_2O_3$ | | 0,015 | 0,014 | 0,014 | 0,015 | 0,014 | 0,009 |
| $Nd_2O_3$ | | 0,048 | 0,053 | 0,16 | 0,160 | 0,110 | |
| $As_2O_3$ | | 0,85 | 0,86 | 0,86 | 0,88 | 0,87 | 0,88 |
| CoO | | | | | 0,0012 | | |
| $H_2O$-Gehalt (β-OH) | mm$^{-1}$ | | 0,33 | 0,34 | | | 0,30 |
| $MgO$ / $As_2O_3$ | | 0,329 | 0,314 | 0,314 | 0,307 | 0,310 | 0,205 |
| $Na_2O + K_2O$ | | 0,67 | 0,72 | 0,72 | 0,72 | 0,73 | 0,77 |
| CaO + SrO | | 0,45 | 0,39 | 0,39 | 0,39 | 0,40 | 0,23 |
| $TiO_2 + ZrO_2 + SnO_2$ | | 4,16 | 4,21 | 4,22 | 4,21 | 4,22 | 4,20 |
| $Na_2O + K_2O + CaO + SrO + BaO$ | | 2,04 | 2,04 | 2,04 | 2,04 | 2,06 | 2,45 |
| **Eigenschaften glasig** | | | | | | | |
| Transformationstemperatur Tg | °C | | 683 | 678 | 678 | | 681 |
| $10^2$ dPas - Temperatur | °C | | 1741 | 1736 | 1732 | | 1746 |
| Verarbeitungstemperatur VA | °C | | 1313 | 1309 | 1310 | | 1312 |
| OEG-Temperatur | °C | | 1285 | 1280 | | | 1300 |

(fortgesetzt)

| Eigenschaften glasig | | | | | | | |
|---|---|---|---|---|---|---|---|
| Entglasungsfestigkeit $V_A$ - OEG | °C | | 28 | 29 | | | 12 |

Tabelle 1 (Fortsetzung):

| Zusammensetzungen und Eigenschaften kristallisierbarer Gläser | | | | | | |
|---|---|---|---|---|---|---|
| Glas Nr. | | 7 | 8 | 9 | 10 | 11 |
| Zusammensetzung | Gew. % | | | | | |
| $Li_2O$ | | 3,53 | 3,64 | 3,63 | 3,68 | 3,70 |
| $Na_2O$ | | 0,46 | 0,22 | 0,15 | 0,14 | 0,14 |
| $K_2O$ | | 0,38 | 0,28 | 0,35 | 0,33 | 0,33 |
| MgO | | 0,13 | 0,27 | 0,32 | 0,32 | 0,32 |
| CaO | | 0,17 | 0,32 | 0,33 | 0,30 | 0,31 |
| SrO | | 0,11 | 0,05 | 0,05 | 0,05 | 0,05 |
| BaO | | 1,45 | 0,95 | 0,98 | 0,98 | 0,98 |
| ZnO | | 1,71 | 1,80 | 1,83 | 1,81 | 1,81 |
| $Al_2O_3$ | | 21,59 | 21,23 | 21,19 | 21,25 | 21,25 |
| $SiO_2$ | | 65,30 | 66,07 | 66,00 | 65,90 | 66,00 |
| $TiO_2$ | | 2,47 | 2,41 | 2,43 | 2,41 | 2,42 |
| $ZrO_2$ | | 1,75 | 1,83 | 1,83 | 1,83 | 1,83 |
| $P_2O_5$ | | 0,028 | 0,029 | 0,029 | 0,030 | 0,029 |
| $SnO_2$ | | | | | | |
| $Fe_2O_3$ | | 0,010 | 0,015 | 0,016 | 0,015 | 0,014 |
| $Nd_2O_3$ | | 0,067 | 0,055 | 0,055 | 0,120 | |
| $As_2O_3$ | | 0,81 | 0,82 | 0,8 | 0,81 | 0,79 |
| CoO | | | | | | |
| $H_2O$-Gehalt (β-OH) | $mm^{-1}$ | 0,29 | 0,37 | 0,36 | 0,30 | |
| $MgO / As_2O_3$ | | 0,160 | 0,329 | 0,400 | 0,395 | 0,405 |
| $Na_2O + K_2O$ | | 0,84 | 0,50 | 0,50 | 0,47 | 0,47 |
| CaO + SrO | | 0,28 | 0,37 | 0,38 | 0,35 | 0,36 |
| $TiO_2 + ZrO_2 + SnO_2$ | | 4,22 | 4,24 | 4,26 | 4,24 | 4,25 |
| $Na_2O + K_2O + CaO + SrO + BaO$ | | 2,57 | 1,82 | 1,86 | 1,80 | 1,81 |
| Eigenschaften glasig | | | | | | |
| Transformationstemperatur Tg | °C | 689 | 685 | 686 | 682 | 676 |
| $10^2$ dPas - Temperatur | °C | 1749 | 1742 | 1741 | 1741 | 1740 |
| Verarbeitungstemperatur VA | °C | 1321 | 1316 | 1311 | 1312 | 1313 |
| OEG-Temperatur | °C | 1300 | 1275 | 1275 | 1290 | |
| Entglasungsfestigkeit $V_A$ - OEG | °C | 21 | 41 | 36 | 22 | |

Tabelle 1 (Fortsetzung):

| Zusammensetzungen und Eigenschaften kristallisierbarer Vergleichsgläser | | | | | | | |
|---|---|---|---|---|---|---|---|
| | | Vergleichsgläser | | | | | |
| Glas Nr. | | 12 | 13 | 14 | 15 | 16 | 17 |
| **Zusammensetzung** | Gew.-% | | | | | | |
| $Li_2O$ | | 3,65 | 3,71 | 3,71 | 3,66 | 3,75 | 4,11 |
| $Na_2O$ | | 0,17 | 0,37 | 0,53 | 0,56 | 0,35 | |
| $K_2O$ | | 0,20 | 0,29 | 0,16 | 0,10 | 0,13 | |
| MgO | | 1,02 | 0,71 | 0,28 | 0,61 | 0,65 | 1,33 |
| CaO | | 0,02 | 0,02 | 0,40 | 0,24 | | |
| SrO | | 0,01 | 0,011 | 0,05 | 0,49 | | |
| BaO | | 0,84 | 1,17 | 0,93 | 0,52 | | |
| ZnO | | 1,61 | | 1,76 | 1,76 | 1,57 | |
| $Al_2O_3$ | | 20,00 | 21,80 | 21,65 | 21,58 | 21,3 | 18,2 |
| $SiO_2$ | | 67,30 | 65,34 | 66,16 | 66,19 | 67,6 | 72,16 |
| $TiO_2$ | | 2,38 | 2,11 | 2,36 | 2,21 | 2,23 | |
| $ZrO_2$ | | 1,84 | 2,24 | 1,83 | 1,83 | 1,76 | 3,69 |
| $P_2O_5$ | | 0,030 | 1,470 | 0,03 | 0,02 | | |
| $SnO_2$ | | | | 0,069 | 0,120 | | |
| $Fe_2O_3$ | | 0,017 | 0,0145 | 0,013 | 0,015 | 0,020 | |
| $Nd_2O_3$ | | 0,059 | | 0,052 | 0,054 | 0,090 | |
| $As_2O_3$ | | 0,81 | 0,75 | | 0,0052 | 0,40 | 0,31 |
| CoO | | | | | | | |
| $H_2O$-Gehalt ($\beta$-OH) | $mm^{-1}$ | 0,35 | | 0,47 | 0,45 | | |
| $MgO / As_2O_3$ | | 1,259 | 0,947 | | 117,308 | 1,625 | 4,290 |
| $Na_2O + K_2O$ | | 0,37 | 0,66 | 0,69 | 0,66 | 0,48 | 0,00 |
| CaO + SrO | | 0,03 | 0,03 | 0,45 | 0,73 | 0,00 | 0,00 |
| $TiO_2 + ZrO_2 + SnO_2$ | | 4,22 | 4,35 | 4,26 | 4,16 | 3,99 | 3,69 |
| $Na_2O + K_2O + CaO + SrO + BaO$ | | 1,24 | 1,86 | 2,07 | 1,91 | 0,48 | 0,00 |
| **Eigenschaften glasig** | | | | | | | |
| Transformationstemperatur Tg | °C | 684 | 698 | 683 | 684 | 681 | 733 |
| $10^2$ dPas - Temperatur | °C | 1753 | 1756 | 1747 | 1736 | | 1376 |
| Verarbeitungstemperatur VA | °C | 1316 | 1332 | 1318 | 1309 | 1320 | 1376 |
| OEG-Temperatur | °C | 1280 | | 1290 | 1250 | 1240 | > 1470 |
| Entglasungsfestigkeit $V_A$ - OEG | °C | 36 | | 28 | 59 | 80 | > 96 |

Tabelle 2: Keramisierungsbedingungen und Eigenschaften der Glaskeramiken mit Hochquarz-Mischkristallen als Hauptkristallphase

| Beispiel Nr. | | 1 | 2 | 3 | 4 | 5 | 6 |
|---|---|---|---|---|---|---|---|
| **Glas Nr.** | | 1 | 2 | 3 | 4 | 5 | 6 |
| **Keramisierungsprogramm** | | 1 | 1 | 1 | 1 | 1 | 1 |

(fortgesetzt)

| Eigenschaften keramisiert | | | | | | | |
|---|---|---|---|---|---|---|---|
| Transmission Normlicht D65, 2° 4 mm Dicke | | | | | | | |
| 400 nm | % | 79,1 | 79,4 | 78,7 | 78,3 | 78,4 | 80,9 |
| 1600 nm | % | 90,5 | 90,1 | 89,9 | 89,6 | 90,1 | 90,9 |
| Lichttransmission Y | % | 88,9 | 88,7 | 86,4 | 85,2 | 87,1 | 89,8 |
| L* | | 95,5 | 95,4 | 94,5 | 94,0 | 94,8 | 95,9 |
| a* | | -0,4 | -0,3 | -0,3 | 0,2 | -0,3 | -0,3 |
| b* | | 2,1 | 1,9 | 0,6 | 0,2 | 1,4 | 2,4 |
| c* | | 2,1 | 1,9 | 0,7 | 0,3 | 1,4 | 2,4 |
| Streuung Normlicht C 4 mm Dicke | | | | | | | |
| haze | % | 0,69 | 0,51 | 1,02 | 0,65 | 0,56 | 0,37 |
| therm Ausdehnung $\alpha_{20/700}$ | $10^{-6}$/K | -0,30 | -0,30 | -0,27 | -0,28 | -0,31 | -0,25 |
| Röntgenbeugung | | | | | | | |
| HQMK-Phasengehalt | % | 71 | 69 | 71 | 70 | 70 | 68 |
| Phasengehalt Restglas | % | 26 | 28 | 26 | 27 | 27 | 29 |
| mittlere Kristallitgröße | nm | 41 | 40 | 41 | 40 | 41 | 38 |

Tabelle 2 (Fortsetzung): Keramisierungsbedingungen und Eigenschaften der Glaskeramiken mit Hochquarz-Mischkristallen als Hauptkristallphase

| Beispiel Nr. | | 7 | 8 | 9 | 10 | 11 |
|---|---|---|---|---|---|---|
| Glas Nr. | | 7 | 8 | 9 | 10 | 11 |
| Keramisierungsprogramm | | 1 | 1 | 1 | 1 | 1 |
| Eigenschaften keramisiert | | | | | | |
| Transmission Normlicht D65, 2° 4 mm Dicke | | | | | | |
| 400 nm | % | 80,6 | 79,6 | 79,6 | 79,2 | 79,7 |
| 1600 nm | % | 90,7 | 89,6 | 89,6 | 89,8 | 90,4 |
| Lichttransmission Y | % | 88,2 | 88,4 | 88,7 | 87,1 | 90,0 |
| L* | | 95,2 | 95,3 | 95,5 | 94,8 | 96,0 |
| a* | | -0,3 | -0,3 | -0,3 | -0,3 | -0,3 |
| b* | | 1,5 | 1,7 | 1,8 | 0,9 | 2,6 |
| c* | | 1,5 | 1,7 | 1,8 | 1,0 | 2,6 |
| Streuung Normlicht C 4 mm Dicke | | | | | | |
| haze | % | 0,43 | 0,68 | 0,55 | 0,75 | 1,07 |
| therm Ausdehnung $\alpha_{20/700}$ | $10^{-6}$/K | -0,20 | -0,41 | -0,37 | -0,38 | -0,41 |
| Röntgenbeugung | | | | | | |
| HQMK-Phasengehalt | % | 65 | 72 | 72 | 70 | |
| Phasengehalt Restglas | % | 32 | 25 | 25 | 27 | |
| mittlere Kristallitgröße | nm | 37 | 37 | 38 | 37 | |

Tabelle 2 (Fortsetzung): Keramisierungsbedingungen und Eigenschaften der Vergleichsglaskeramiken mit Hochquarz-Mischkristallen als Hauptkristallphase

| | | Vergleichsbeispiele | | | | | |
|---|---|---|---|---|---|---|---|
| Beispiel Nr. | | 12 | 13 | 14 | 15 | 16 | 17 |
| Glas Nr. | | 12 | 13 | 14 | 15 | 16 | 17 |
| Keramisierungsprogramm | | 1 | 1 | 1 | 1 | im Text | 2 |
| Eigenschaften keramisiert | | | | | | | |
| Transmission Normlicht D65, 2° 4 mm Dicke | | | | | | | |
| 400 nm | % | 70,9 | 77,4 | 76,4 | 65,7 | | 84,7 |
| 1600 nm | % | 89,2 | 88,7 | 89.7 | 89,8 | | 89,0 |
| Lichttransmission Y | % | 87,1 | 89,5 | 86,0 | 84,3 | 87,0 | 90,0 |
| L* | | 94,8 | 95,8 | 94,3 | 93,6 | 94,6 | 96,0 |
| a* | | -0,5 | -0,5 | 0,0 | -0,2 | -0,5 | -0,2 |
| b* | | 3,2 | 3,4 | 2,4 | 4,2 | 1,8 | 1,1 |
| c* | | 3,3 | 3,4 | 2,4 | 4,2 | 1,8 | 1,1 |
| Streuung Normlicht C 4 mm Dicke | | | | | | | |
| haze | % | 0,85 | 0,54 | 0,51 | 0,62 | 0,28 | 1,12 |
| therm Ausdehnung $\alpha_{20/700}$ | $10^{-6}$/K | -0,01 | | -0,26 | -0,11 | -0,26 | |
| Röntgenbeugung | | | | | | | |
| HQMK-Phasengehalt | % | 73 | | 68 | 72 | | 80 |
| Phasengehalt Restglas | % | 24 | | 29 | 25 | | 17 |
| mittlere Kristallitgröße | nm | 35 | | 37 | 41 | | 73 |

Tabelle 3: Keramisierungsbedingungen und Eigenschaften der Glaskeramiken mit Keatit-Mischkristallen als Hauptkristallphase

| Beispiel Nr. | | 18 | 19 | 20 | 21 |
|---|---|---|---|---|---|
| Glas Nr. | | 1 | 1 | 8 | 9 |
| Aussehen | | transluzent | transluzent bis opak | transluzent | transluzent |
| Keramisierungsprogramm | | 3 | 3 | 3 | 3 |
| Tmax | °C | 1100 | 1150 | 1100 | 1050 |
| tmax | min | 5 | 5 | 5 | 5 |
| Eigenschaften keramisiert | | | | | |
| Transmission Normlicht D65, 2°, 4 mm Dicke | | | | | |
| 400 nm | % | 0,12 | < 0,01 | 0,27 | 3,4 |
| 1600 nm | % | 81,5 | 70 | 82,5 | 86,9 |
| Lichttransmission Y | % | 12,8 | 5,4 | 15,2 | 32,9 |
| L* | | 42,5 | 27,8 | 45,9 | 64,1 |
| a* | | 4,1 | 8,2 | 4,0 | 6,9 |
| b* | | 27,7 | 30,3 | 28,4 | 30,5 |
| c* | | 28,0 | 31,4 | 28,7 | 31,3 |

(fortgesetzt)

| Remission Normlicht D65, 2°, 4 mm Dicke | | | | | |
|---|---|---|---|---|---|
| 400 nm | % | 51,5 | 60,3 | 51,0 | 38,1 |
| 1600 nm | % | 9,7 | 12,1 | 9,8 | 8,8 |
| Lichttransmission Y | % | 55,3 | 72,0 | 51,9 | 29,7 |
| L* | | 79,2 | 88,0 | 77,2 | 61,4 |
| a* | | -4,8 | -2,4 | -4,6 | -5,2 |
| b* | | -7,5 | -1,3 | -8,4 | -16,9 |
| c* | | 8,9 | 2,8 | 9,6 | 17,7 |
| Therm. Ausdehnung $\alpha$20/700 | $10^{-6}$/K | 1,2 | 1,2 | 1,04 | |

Tabelle 3: (Fortsetzung) Keramisierungsbedingungen und Eigenschaften der Glaskeramiken mit Keatit-Mischkristallen als Hauptkristallphase, Vergleichsglaskeramiken Beispiel 24 und 25

| Beispiel Nr. | | 22 | 23 | 24 | 25 |
|---|---|---|---|---|---|
| Glas Nr. | | 11 | 11 | 14 | 14 |
| Aussehen | | transluzent | transluzent | transluzent | transluzent bis opak |
| Keramisierungsprogramm | | 3 | 3 | 3 | 3 |
| Tmax | °C | 1050 | 1100 | 1100 | 1150 |
| tmax | min | 5 | 5 | 5 | 5 |
| Eigenschaften keramisiert | | | | | |
| Transmission Normlicht D65, 2°, 4 mm Dicke | | | | | |
| 400 nm | % | 4,5 | 0,35 | 0,12 | 0,02 |
| 1600 nm | % | 87,4 | 83,8 | 81,5 | 79,7 |
| Lichttransmission Y | % | 35,3 | 13,9 | 22,5 | 7,7 |
| L* | | 65,9 | 44,1 | 54,6 | 33,3 |
| a* | | 7,0 | 4,9 | 8,7 | 8,1 |
| b* | | 34,1 | 27,3 | 32,1 | 31,7 |
| c* | | 34,9 | 27,7 | 33,3 | 32,7 |
| Remission Normlicht D65, 2°, 4 mm Dicke | | | | | |
| 400 nm | % | 40,5 | 58,7 | 36,5 | 49,4 |
| 1600 nm | % | 9,3 | 9,7 | 9,1 | 9,9 |
| Lichttransmission Y | % | 27,2 | 55,2 | 29,9 | 51,3 |
| L* | | 59,2 | 79,2 | 61,6 | 76,9 |
| a* | | -3,3 | -4,8 | -4,2 | -2,8 |
| b* | | -19,4 | -10,3 | -13,5 | -6,3 |
| c* | | 19,6 | 11,3 | 14,1 | 6,9 |
| Therm. Ausdehnung $\alpha$20/700 | $10^{-6}$/K | 1,02 | 0,98 | 1,2 | 1,2 |

**Bedingungen**

| | |
|---|---|
| Bedingung B1: | 1,3 Gew.-% < $Na_2O + K_2O + CaO + SrO + BaO$ < 3,5 Gew.-% |
| Bedingung B2: | 0,2 Gew.-% $\leq Na_2O + K_2O \leq$ 1,5 Gew.-% |
| Bedingungg B2a: | 0,4 Gew-.% < $Na_2O + K_2O$ < 1 Gew.-% |
| Bedingung B3: | 0,05 Gew.-% $\leq CaO + SrO \leq$ 1 Gew.-% |
| Bedingung B4: | $MgO/As_2O_3$ < 1 Gew.-% |
| Bedingung B4a: | $MgO/As_2O_3$ < 0,7 Gew.-% |
| Bedingung B4b: | $MgO/As_2O_3$ > 0,05 Gew.-% |

**Patentansprüche**

1. Kristallisierbares Lithiumaluminiumsilikat-Glas für die Herstellung transparenter Glaskeramiken, **dadurch gekennzeichnet, dass** es folgende Komponenten (in Gew.-% auf Oxidbasis) enthält:

| | |
|---|---|
| $Li_2O$ | 3 - < 4,5 |
| $Al_2O_3$ | 19 - 24 |
| $SiO_2$ | 62 - 70 |
| $Na_2O$ | 0 - 1,5 |
| $K_2O$ | 0 - 1,5 |
| MgO | 0,01 - < 0,5 |
| CaO | 0-1,5 |
| SrO | 0 - 1,5 |
| BaO | 0 - 3 |
| ZnO | 0 - 3 |
| $TiO_2$ | > 1,6 - 2,8 |
| $ZrO_2$ | 1 - < 2,5 |
| $P_2O_5$ | 0 - < 4 |
| $Fe_2O_3$ | 0,005 - 0,025 |
| $As_2O_3$ | 0,1 - 2 mit der Bedingung ( in Gew.-%): |

$$1,3 < Na_2O + K_2O + CaO + SrO + BaO < 3,5 \quad \text{(Bedingung B1)}$$

2. Kristallisierbares Lithiumaluminiumsilikat-Glas nach Anspruch 1, **dadurch gekennzeichnet, dass**

$$0,2 \text{ Gew.-\%} \leq Na_2O + K_2O \leq 1,5 \text{ Gew.-\%} \quad \text{(Bedingung B2)}$$

gilt.

3. Kristallisierbares Lithiumaluminiumsilikat-Glas nach mindestens einem der vorherigen Ansprüche, **dadurch ge-kennzeichnet, dass**

$$0,05 \text{ Gew.-\%} \leq CaO + SrO \leq 1 \text{ Gew.-\%} \quad \text{(Bedingung B3)}$$

gilt.

4. Kristallisierbares Lithiumaluminiumsilikat-Glas nach einem der vorherigen Ansprüche, **dadurch gekennzeichnet, dass** es SrO mit einem Anteil von 0,02 Gew.-% bis 1 Gew.-% enthält.

5. Kristallisierbares Lithiumaluminiumsilikat-Glas nach einem der vorherigen Ansprüche, **dadurch gekennzeichnet, dass** es BaO mit einem Anteil von 0,2 Gew.-% bis 2 Gew.-% enthält.

6. Kristallisierbares Lithiumaluminiumsilikat-Glas nach einem der Ansprüche 1 - 5, **dadurch gekennzeichnet, dass** für das Verhältnis der Komponenten MgO und $As_2O_3$ gilt:

$$MgO/As_2O_3 < 1 \text{ (Bedingung B4)}$$

7. Kristallisierbares Lithiumaluminiumsilikat-Glas nach einem der Ansprüche 1 - 6, **dadurch gekennzeichnet, dass** für das Verhältnis der Komponenten MgO und $As_2O_3$ gilt:

$$0,05 < MgO/As_2O_3 \text{ (Bedingung B4b)}$$

8. Kristallisierbares Lithiumaluminiumsilikat-Glas nach mindestens einem der vorherigen Ansprüche, **dadurch gekennzeichnet, dass** es MgO mit einem Anteil von 0,05 Gew.-% bis 0,4 Gew.-% enthält.

9. Kristallisierbares Lithiumaluminiumsilikat-Glas nach mindestens einem der vorherigen Ansprüche **dadurch gekennzeichnet, dass** es $As_2O_3$ mit einem Anteil von 0,2 Gew.-% bis 1,5 Gew.-% enthält.

10. Kristallisierbares Lithiumaluminiumsilikat-Glas nach mindestens einem der vorherigen Ansprüche, **dadurch gekennzeichnet, dass** es $Fe_2O_3$ mit einem Anteil von 0,008 bis 0,02 Gew.-% enthält.

11. Kristallisierbares Lithiumaluminiumsilikat-Glas nach mindestens einem der vorherigen Ansprüche, **dadurch gekennzeichnet, dass** es weniger als 0,5 Gew.-% $Sb_2O_3$ enthält.

12. Kristallisierbares Lithiumaluminiumsilikat-Glas nach mindestens einem der vorherigen Ansprüche, **dadurch gekennzeichnet, dass** es weniger als 0,05 Gew.-% $SnO_2$ enthält.

13. Kristallisierbares Lithiumaluminiumsilikat-Glas nach mindestens einem der vorhergehenden Ansprüche, **dadurch gekennzeichnet, dass** es weniger als 0,5 Gew.-% $B_2O_3$ und/oder weniger als 0,5 Gew.-% Fluor enthält.

14. Kristallisierbares Lithiumaluminiumsilikat-Glas nach mindestens einem der vorhergehenden Ansprüche, **dadurch gekennzeichnet, dass** es $Nd_2O_3$ mit einem Anteil von 0,005 Gew.-% bis 0,3 Gew.-% enthält.

15. Kristallisierbares Lithiumaluminiumsilikat-Glas nach mindestens einem der vorhergehenden Ansprüche, **dadurch gekennzeichnet, dass** es CoO mit einem Anteil von 0,1 bis 20 ppm enthält.

16. Kristallisierbares Lithiumaluminiumsilikat-Glas nach Anspruch 1, **dadurch gekennzeichnet, dass** es folgende Komponenten (in Gew.-% auf Oxidbasis) enthält:

| | |
|---|---|
| $Li_2O$ | 3,2 - < 4,3 |
| $Al_2O_3$ | 19 - 24 |
| $SiO_2$ | 62 - 68 |
| $Na_2O$ | 0 - 1 |
| $K_2O$ | 0 - 1 |
| $Na_2O + K_2O$ | 0,2 - 1,5 |
| MgO | 0,05 - < 0,5 |
| CaO | 0,05 - 1,5 |
| SrO | 0 - 1,5 |
| BaO | 0 - 3 |

(fortgesetzt)

| | |
|---|---|
| ZnO | 0 - 2,5 |
| $TiO_2$ | > 1,6 - 2,8 |
| $ZrO_2$ | 1 - < 2,5 |
| $P_2O_5$ | 0 - 2 |
| $Fe_2O_3$ | 0,008 - 0,025 |
| $As_2O_3$ | 0,2 - 2 |

mit der Bedingung ( in Gew.-%):

$$1,3 < Na_2O + K_2O + CaO + SrO + BaO < 3$$

**17.** Kristallisierbares Lithiumaluminiumsilikat-Glas nach Anspruch 1, **dadurch gekennzeichnet, dass** es folgende Komponenten (in Gew.-% auf Oxidbasis) enthält:

| | |
|---|---|
| $Li_2O$ | 3,4 - < 4,3 |
| $Al_2O_3$ | 20 - 24 |
| $SiO_2$ | 62 - 68 |
| $Na_2O$ | 0,05 - 1 |
| $K_2O$ | 0 - 1 |
| $Na_2O + + K_2O$ | 0,2 - 1,2 |
| MgO | 0,1 - 0,4 |
| CaO | 0,05 - 0,8 |
| SrO | 0-1 |
| CaO + SrO | 0,1 - 1 |
| BaO | 0-2 |
| ZnO | > 0 - 2,5 |
| $TiO_2$ | > 2 - 2,8 |
| $ZrO_2$ | 1 - < 2,2 |
| $P_2O_5$ | 0-1,5 |
| $Fe_2O_3$ | 0,008 - 0,02 |
| $As_2O_3$ | 0,2 - 1,5 |

mit der Bedingung (in Gew.-%):

$$1,5 < Na_2O + K_2O + CaO + SrO + BaO < 3$$

**18.** Kristallisierbares Lithiumaluminiumsilikat-Glas nach Anspruch 1, **dadurch gekennzeichnet, dass** es folgende Komponenten (in Gew.-% auf Oxidbasis) enthält:

| | |
|---|---|
| $Li_2O$ | 3,4 - < 4 |
| $Al_2O_3$ | 20 - 23 |
| $SiO_2$ | 62 - 68 |
| $Na_2O$ | 0,05 - 1 |
| $K_2O$ | 0,05 - 1 |
| $Na_2O + K_2O$ | > 0,4 - < 1 |
| MgO | 0,1 - 0,4 |
| CaO | 0,05 - 0,8 |
| SrO | 0,02 - 1 |
| CaO + SrO | 0,1 - 0,8 |
| BaO | 0 - 2 |
| ZnO | 0,5 - 2,5 |
| $TiO_2$ | > 2 - 2,8 |

(fortgesetzt)

| | |
|---|---|
| $ZrO_2$ | 1 - < 2,2 |
| $P_2O_5$ | 0,01- < 1 |
| $Fe_2O_3$ | 0,008 - 0,02 |
| $As_2O_3$ | 0,2 - 1,5 |

mit der Bedingung (in Gew.-%):

$$1,5 < Na_2O + K_2O + CaO + SrO + BaO < 3$$

19. Kristallisierbares Lithiumaluminiumsilikat-Glas nach mindestens einem der vorhergehenden Ansprüche, **gekennzeichnet durch**

  • eine $10^2$ dPas - Temperatur von weniger als 1760 °C und/oder
  • eine Verarbeitungstemperatur $V_A$ von höchstens 1330 °C und/oder
  • eine obere Entglasungsgrenze OEG, die mindestens 15 °C unter der Verarbeitungstemperatur $V_A$ liegt.

20. Glaskeramik, hergestellt aus einem Lithiumaluminiumsilikat-Glas nach einem der Ansprüche 1 bis 19 durch einen mehrstufigen Temperaturprozess.

21. Glaskeramik nach Anspruch 20, **dadurch gekennzeichnet, dass** sie für 4 mm Dicke eine Helligkeit Y von größer als 84 % und/oder eine Farbe c* von höchstens 3 und/oder einen haze-Wert < 2,5 % besitzt.

22. Glaskeramik nach einem der Ansprüche 20 oder 21, **dadurch gekennzeichnet, dass** sie nach Durchtritt von Licht der Normlichtart D65 bei 4 mm Dicke eine Buntheit c* im CIELAB - Farbsystem aufweist, wobei die Helligkeit Y im CIE-Farbsystem der folgenden Beziehung genügt:

$$Y^* \geq d \cdot c^* + e$$

mit d = 1,83, mit e $\geq$ 84,4 und mit 0 $\leq$ c* $\leq$ 3.

23. Verfahren zur Herstellung eines kristallisierbaren Lithiumaluminiumsilikat-Glases nach einem der Ansprüche 1 bis 19, **gekennzeichnet durch** die Schritte:

  a) Bereitstellen eines Gemengesatzes aus technischen Rohstoffen, beinhaltend pulverförmige Gemengeanteile und 20 bis 80 Gew.-% Scherben;
  b) Schmelzen des Gemengesatzes und Läutern bei Temperaturen größer als 1600 °C;
  c) Abkühlen der Glasschmelze und Formgebung bei Temperaturen in der Nähe der Verarbeitungstemperatur $V_A$; und
  d) Abkühlen in einem Entspannungsofen auf Raumtemperatur, wobei unerwünschte Spannungen im Glas entfernt werden.

24. Verfahren zur Herstellung einer Glaskeramik nach einem der Ansprüche 20 bis 22, **dadurch gekennzeichnet, dass** die Keramisierung mit folgenden Verfahrensschritten durchgeführt wird:

  a) Erhöhen der Temperatur des kristallisierbaren Glases auf eine Temperatur $T_a$ im Bereich von 680 °C bis 730 °C innerhalb von 3 bis 60 Minuten;
  b) Erhöhen der Temperatur des kristallisierbaren Glases innerhalb des Temperaturbereichs der Keimbildung von der Temperatur $T_a$ bis 800°C über einen Zeitraum von 10 bis 100 Minuten;
  c) Erhöhen der Temperatur des Kristallisationskeime enthaltenden Glases innerhalb von 5 bis 80 Minuten Dauer in den Temperaturbereich hoher Kristallwachstumsgeschwindigkeit von 850 °C bis 950°C;
  d) Halten innerhalb des Temperaturbereiches bei der maximalen Temperatur von 850 °C bis 950°C über 0 bis zu 60 Minuten, wobei Kristalle des Typs Hochquarz-Mischkristalle auf den Kristallisationskeimen wachsen,
  e) rasches Abkühlen der erhaltenen Glaskeramik auf Raumtemperatur in weniger als 150 Minuten,

wobei die Keramisierung des Glases eine Gesamtdauer von weniger als 300 min aufweist.

25. Verwendung einer Glaskeramik nach einem der Ansprüche 20 bis 22, die in Form einer Platte mit einer Dicke von 2mm bis 20mm vorliegt als Brandschutzglas, Kaminsichtscheibe, Backofensichtscheibe, Kochfläche, Abdeckung im Beleuchtungssektor, Sicherheitsglasscheibe, Trägerplatte oder Ofenauskleidung.

**Claims**

1. Crystallisable lithium aluminium silicate glass for the manufacture of transparent glass ceramics, **characterised in that** it contains the following components (in % by weight on an oxide basis):

| | |
|---|---|
| $Li_2O$ | 3-<4.5 |
| $Al_2O_3$ | 19-24 |
| $SiO_2$ | 62-70 |
| $Na_2O$ | 0-1.5 |
| $K_2O$ | 0-1.5 |
| MgO | 0.01-<0.5 |
| CaO | 0-1.5 |
| SrO | 0-1.5 |
| BaO | 0-3 |
| ZnO | 0-3 |
| $TiO_2$ | > 1.6-2.8 |
| $ZrO_2$ | 1-<2.5 |
| $P_2O_5$ | 0-<4 |
| $Fe_2O_3$ | 0.005-0.025 |

$AS_2O_3$ 0.1-2 with the condition (in % by weight):

$$1.3 < Na_2O + K_2O + CaO + SrO + BaO < 3.5 \text{ (condition B1).}$$

2. Crystallisable lithium aluminium silicate glass according to Claim 1, **characterised in that**

$$0.2 \text{ \% by weight} < Na_2O + K_2O < 1.5\% \text{ by weight (condition B2).}$$

3. Crystallisable lithium aluminium silicate glass according to at least one of the preceding claims, **characterised in that**

$$0.05\% \text{ by weight} < CaO + SrO < 1\% \text{ by weight (condition B3).}$$

4. Crystallisable lithium aluminium silicate glass according to one of the preceding claims, **characterised in that** it contains SrO with a proportion of 0.02% by weight to 1% by weight.

5. Crystallisable lithium aluminium silicate glass according to one of the preceding claims, **characterised in that** it contains BaO with a proportion of 0.2% by weight to 2% by weight.

6. Crystallisable lithium aluminium silicate glass according to one of Claims 1-5, **characterised in that** for the ratio of components MgO and $As_2O_3$:

$$MgO/As_2O_3 < 1 \text{ (condition B4).}$$

7. Crystallisable lithium aluminium silicate glass according to one of Claims 1-6, **characterised in that** for the ratio of components MgO and $As_2O_3$:

$$0.05 < MgO/As_2O_3 \text{ (condition B4b).}$$

8. Crystallisable lithium aluminium silicate glass according to at least one of the preceding claims, **characterised in that** it contains MgO with a proportion of 0.05% by weight to 0.4% by weight.

9. Crystallisable lithium aluminium silicate glass according to at least one of the preceding claims, **characterised in that** it contains $As_2O_3$ with a proportion of 0.2% by weight to 1.5% by weight.

10. Crystallisable lithium aluminium silicate glass according to at least one of the preceding claims, **characterised in that** it contains $Fe_2O_3$ with a proportion of 0.008 to 0.02% by weight.

11. Crystallisable lithium aluminium silicate glass according to at least one of the preceding claims, **characterised in that** it contains less than 0.5% by weight $Sb_2O_3$.

12. Crystallisable lithium aluminium silicate glass according to at least one of the preceding claims, **characterised in that** it contains less than 0.05% by weight $SnO_2$.

13. Crystallisable lithium aluminium silicate glass according to at least one of the preceding claims, **characterised in that** it contains less than 0.5% by weight $B_2O_3$ and/or less than 0.5% by weight fluorine.

14. Crystallisable lithium aluminium silicate glass according to at least one of the preceding claims, **characterised in that** it contains $Nd_2O_3$ with a proportion of 0.005% by weight to 0.3% by weight.

15. Crystallisable lithium aluminium silicate glass according to at least one of the preceding claims, **characterised in that** it contains CoO with a proportion of 0.1 to 20 ppm.

16. Crystallisable lithium aluminium silicate glass according to Claim 1, **characterised in that** it contains the following components (in % by weight on an oxide basis):

| | |
|---|---|
| $Li_2O$ | 3.2-<4.3 |
| $Al_2O_3$ | 19-24 |
| $SiO_2$ | 62-68 |
| $Na_2O$ | 0-1 |
| $K_2O$ | 0-1 |
| $Na_2O + K_2O$ | 0.2 - 1.5 |
| MgO | 0.05 - <0.5 |
| CaO | 0.05-1.5 |
| SrO | 0-1.5 |
| BaO | 0-3 |
| ZnO | 0-2.5 |
| $TiO_2$ | > 1.6-2.8 |
| $ZrO_2$ | 1-<2.5 |
| $P_2O_5$ | 0-2 |
| $Fe_2O_3$ | 0.008-0.025 |
| $As_2O_3$ | 0.2 - 2 |

with the condition (in % by weight):

$$1.3 < Na_2O + K_2O + CaO + SrO + BaO < 3.$$

17. Crystallisable lithium aluminium silicate glass according to Claim 1, **characterised in that** it contains the following components (in % by weight on an oxide basis):

| | |
|---|---|
| $Li_2O$ | 3.4-<4.3 |
| $Al_2O_3$ | 20-24 |
| $SiO_2$ | 62-68 |

(fortgesetzt)

| | |
|---|---|
| Na$_2$O | 0.05 -1 |
| K$_2$O | 0-1 |
| Na$_2$O +K$_2$O | 0.2 - 1.2 |
| MgO | 0.1 -0,4 |
| CaO | 0.05-0.8 |
| SrO | 0-1 |
| CaO + SrO | 0.1-1 |
| BaO | 0-2 |
| ZnO | >0-2.5 |
| TiO$_2$ | >2-2.8 |
| ZrO$_2$ | 1 - < 2.2 |
| P$_2$O$_5$ | 0-1.5 |
| Fe$_2$O$_3$ | 0.008-0.02 |
| AS$_2$O$_3$ | 0.2- 1.5 |

with the condition (in % by weight):

$$1.5 < Na_2O + K_2O + CaO + SrO + BaO < 3.$$

**18.** Crystallisable lithium aluminium silicate glass according to Claim 1, **characterised in that** it contains the following components (in % by weight on an oxide basis):

| | |
|---|---|
| Li$_2$O | 3.4-<4 |
| Al$_2$O$_3$ | 20-23 |
| SiO$_2$ | 62-68 |
| Na$_2$O | 0.05 -1 |
| K$_2$O | 0.05 - 1 |
| Na$_2$O + K$_2$O | >0.4-< 1 |
| MgO | 0.1 -0,4 |
| CaO | 0.05-0.8 |
| SrO | 0.02 - 1 |
| CaO + SrO | 0.1-0.8 |
| BaO | 0-2 |
| ZnO | 0.5-2.5 |
| TiO$_2$ | >2-2.8 |
| ZrO$_2$ | 1 - < 2.2 |
| P$_2$O$_5$ | 0.01-<1 |
| Fe$_2$O$_3$ | 0.008-0.02 |
| As$_2$O$_3$ | 0.2- 1.5 |

with the condition (in % by weight):

$$1.5 < Na_2O + K_2O + CaO + SrO + BaO < 3.$$

**19.** Crystallisable lithium aluminium silicate glass according to at least one of the preceding claims, **characterised by**

- a 10$^2$ dPas temperature of less than 1760 °C and/or
- a processing temperature V$_A$ of at most 1330 °C and/or
- an upper devitrification limit OEG, which is at least 15 °C below the processing temperature V$_A$.

**20.** Glass ceramic, manufactured from a lithium aluminium silicate glass according to one of Claims 1 to 19 through a multi-stage temperature process.

21. Glass ceramic according to Claim 20, **characterised in that** for 4 mm thickness it has a brightness Y of greater than 84% and/or a colour c* of at most 3 and/or a haze value < 2.5%.

22. Glass ceramic according to one of Claims 20 or 21, **characterised in that** it has a chromaticity c* in the CIELAB colour system after the passage of light of standard illuminant D65 at a thickness of 4 mm, wherein the brightness Y in the CIE colour system satisfies the following relationship:

$$Y^* \geq d \cdot c^* + e$$

where d = 1.83, where e $\geq$ 84.4 and where 0 $\leq$ c* $\leq$ 3.

23. Method for manufacturing a crystallisable lithium aluminium silicate glass according to one of Claims 1 to 19, **characterised by** the steps of:

   a) providing a batch mixture of technical raw materials, including powdered batch components and 20 to 80% by weight cullet;
   b) melting the batch mixture and refining at temperatures greater than 1600 °C;
   c) cooling the molten glass and moulding at temperatures close to the processing temperature $V_A$; and
   d) cooling in a stress-relief furnace to room temperature, wherein undesired tensions in the glass are removed.

24. Method for manufacturing a glass ceramic according to one of Claims 20 to 22, **characterised in that** the ceramisation is carried out with the following process steps:

   a) increasing the temperature of the crystallisable glass to a temperature $T_a$ in the range of 680 °C to 730 °C within 3 to 60 minutes;
   b) increasing the temperature of the crystallisable glass within the nucleation temperature range from temperature $T_a$ to 800 °C over a period of 10 to 100 minutes;
   c) increasing the temperature of the glass containing crystallisation nuclei within 5 to 80 minutes to the high crystal growth rate temperature range of 850 °C to 950 °C;
   d) holding within the temperature range at the maximum temperature of 850 °C to 950 °C for 0 to 60 minutes, wherein crystals of the high quartz solid solution type grow on the crystallisation nuclei,
   e) rapidly cooling the obtained glass ceramic to room temperature in less than 150 minutes,

   wherein the ceramisation of the glass has a total duration of less than 300 minutes.

25. Use of a glass ceramic according to one of Claims 20 to 22, which is present in the form of a plate with a thickness of 2 mm to 20 mm, as fire protection glass, chimney viewing window, oven viewing window, cooking surface, lighting sector cover, safety glass pane, carrier plate or furnace lining.

**Revendications**

1. Verre de silicate de lithium-aluminium cristallisable pour la fabrication de vitrocéramiques transparentes, **caractérisé en ce qu'**il contient les composants suivants (en % en poids sur la base des oxydes) :

| | |
|---|---|
| $Li_2O$ | 3 - < 4,5 |
| $Al_2O_3$ | 19 - 24 |
| $SiO_2$ | 62 - 70 |
| $Na_2O$ | 0 - 1,5 |
| $K_2O$ | 0 - 1,5 |
| MgO | 0,01 - < 0,5 |
| CaO | 0 - 1,5 |
| srO | 0 - 1,5 |
| BaO | 0-3 |

(fortgesetzt)

| ZnO | 0-3 |
|---|---|
| $TiO_2$ | > 1,6 - 2,8 |
| $ZrO_2$ | 1 - < 2,5 |
| $P_2O_5$ | 0 -< 4 |
| $Fe_2O_3$ | 0,005 - 0,025 |

$As_2O_3$ 0,1 - 2 avec la condition (en % en poids) :

$$1,3 < Na_2O + K_2O + CaO + SrO + BaO < 3,5 \text{ (condition B1)}.$$

2. Verre de silicate de lithium-aluminium cristallisable selon la revendication 1, **caractérisé en ce que**

$$0,2 \text{ \% en poids} \leq Na_2O + K_2O \leq 1,5 \text{ \% en poids (condition B2)}$$

s'applique.

3. Verre de silicate de lithium-aluminium cristallisable selon au moins l'une des revendications précédentes, **caractérisé en ce que**

$$0,05 \text{ \% en poids} \leq CaO + SrO \leq 1 \text{ \% en poids (condition B3)}$$

s'applique.

4. Verre de silicate de lithium-aluminium cristallisable selon l'une des revendications précédentes, **caractérisé en ce qu'**il contient du SrO à raison de 0,02 % en poids à 1 % en poids.

5. Verre de silicate de lithium-aluminium cristallisable selon l'une des revendications précédentes, **caractérisé en ce qu'**il contient du BaO à raison de 0,2 % en poids à 2 % en poids.

6. Verre de silicate de lithium-aluminium cristallisable selon l'une des revendications 1 à 5, **caractérisé en ce que** le rapport des composants MgO et $As_2O_3$ est le suivant :

$$MgO/As_2O_3 < 1 \text{ (condition B4)}.$$

7. Verre de silicate de lithium-aluminium cristallisable selon l'une des revendications 1 à 6, **caractérisé en ce que** le rapport des composants MgO et $As_2O_3$ est le suivant :

$$0,05 < MgO/As_2O_3 \text{ (condition B4b)}.$$

8. Verre de silicate de lithium-aluminium cristallisable selon au moins l'une des revendications précédentes, **caractérisé en ce qu'**il contient du MgO à raison de 0,05 % en poids à 0,4 % en poids.

9. Verre de silicate de lithium-aluminium cristallisable selon au moins l'une des revendications précédentes, **caractérisé en ce qu'**il contient de l'$As_2O_3$ à raison de 0,2 % en poids à 1,5 % en poids.

10. Verre de silicate de lithium-aluminium cristallisable selon au moins l'une des revendications précédentes, **caractérisé en ce qu'**il contient du $Fe_2O_3$ à raison de 0,008 en poids à 0,02 % en poids.

11. Verre de silicate de lithium-aluminium cristallisable selon au moins l'une des revendications précédentes, **caractérisé en ce qu'**il contient moins de 0,5 % en poids de $Sb_2O_3$.

12. Verre de silicate de lithium-aluminium cristallisable selon au moins l'une des revendications précédentes, **caracté-**

**risé en ce qu'**il contient moins de 0,05 % en poids de $SnO_2$.

13. Verre de silicate de lithium-aluminium cristallisable selon au moins l'une des revendications précédentes, **caractérisé en ce qu'**il contient moins de 0,5 % en poids de $B_2O_3$ et/ou moins de 0,5 % en poids de fluor.

14. Verre de silicate de lithium-aluminium cristallisable selon au moins l'une des revendications précédentes, **caractérisé en ce qu'**il contient du $Nd_2O_3$ à raison de 0,005 % en poids à 0,3 % en poids.

15. Verre de silicate de lithium-aluminium cristallisable selon au moins l'une des revendications précédentes, **caractérisé en ce qu'**il contient du CoO à raison de 0,1 à 20 ppm.

16. Verre de silicate de lithium-aluminium cristallisable selon la revendication 1, **caractérisé en ce qu'**il contient les composants suivants (en % en poids sur la base des oxydes) :

| | |
|---|---|
| $Li_2O$ | 3,2 - < 4,3 |
| $Al_2O_3$ | 19 - 24 |
| $SiO_2$ | 62 - 68 |
| $Na_2O$ | 0-1 |
| $K_2O$ | 0-1 |
| $Na_2O + K_2O$ | 0,2 - 1,5 |
| MgO | 0,05 - < 0,5 |
| CaO | 0,05 - 1,5 |
| SrO | 0 - 1,5 |
| BaO | 0-3 |
| ZnO | 0 - 2,5 |
| $TiO_2$ | > 1,6 - 2,8 |
| $ZrO_2$ | 1 - < 2,5 |
| $P_2O_5$ | 0-2 |
| $Fe_2O_3$ | 0,008 - 0,025 |
| $As_2O_3$ | 0,2 - 2 |

avec la condition (en % en poids) :

$$1,3 < Na_2O + K_2O + CaO + SrO + BaO < 3.$$

17. Verre de silicate de lithium-aluminium cristallisable selon la revendication 1, **caractérisé en ce qu'**il contient les composants suivants (en % en poids sur la base des oxydes) :

| | |
|---|---|
| $Li_2O$ | 3,4 - < 4,3 |
| $Al_2O_3$ | 20 - 24 |
| $SiO_2$ | 62 - 68 |
| $Na_2O$ | 0,05- 1 |
| $K_2O$ | 0-1 |
| $Na_2O + K_2O$ | 0,2 - 1,2 |
| MgO | 0,1 - 0,4 |
| CaO | 0,05 - 0,8 |
| SrO | 0-1 |
| CaO + SrO | 0,1 - 1 |
| BaO | 0 - 2 |
| ZnO | > 0 - 2,5 |
| $TiO_2$ | > 2 - 2,8 |
| $ZrO_2$ | 1 - < 2,2 |
| $P_2O_5$ | 0 - 1,5 |

(fortgesetzt)

| | |
|---|---|
| Fe$_2$O$_3$ | 0,008 - 0,02 |
| As$_2$O$_3$ | 0,2 - 1,5 |

avec la condition (en % en poids) :

$$1{,}5 < Na_2O + K_2O + CaO + SrO + BaO < 3.$$

**18.** Verre de silicate de lithium-aluminium cristallisable selon la revendication 1, **caractérisé en ce qu'**il contient les composants suivants (en % en poids sur la base des oxydes) :

| | |
|---|---|
| Li$_2$O | 3,4 - < 4 |
| A1203 | 20 - 23 |
| SiO$_2$ | 62 - 68 |
| Na$_2$O | 0,05 - 1 |
| K$_2$O | 0,05 - 1 |
| Na$_2$O + K$_2$O | >0,4-<1 |
| MgO | 0,1 - 0,4 |
| CaO | 0,05 - 0,8 |
| SrO | 0,02 - 1 |
| CaO +SrO | 0,1 - 0,8 |
| BaO | 0-2 |
| ZnO | 0,5 - 2,5 |
| TiO$_2$ | >2-2,8 |
| ZrO$_2$ | 1 - < 2,2 |
| P$_2$O$_5$ | 0,01 - <1 |
| Fe$_2$O$_3$ | 0,008 - 0,02 |
| As$_2$O$_3$ | 0,2 - 1,5 |

avec la condition (en % en poids) :

$$1{,}5 < Na_2O + K_2O + CaO + SrO + BaO < 3.$$

**19.** Verre de silicate de lithium-aluminium cristallisable selon au moins l'une des revendications précédentes, **caractérisé par**

- une température de 10$^2$ dPas inférieure à 1760 °C, et/ou
- une température de traitement V$_A$ de 1330 °C au maximum et/ou
- une limite supérieure de dévitrification OEG qui est inférieure d'au moins 15 °C à la température de traitement V$_A$.

**20.** Vitrocéramique fabriquée à partir d'un verre de silicate de lithium-aluminium selon l'une des revendications 1 à 19 par un processus de cuisson en plusieurs étapes.

**21.** Vitrocéramique selon la revendication 20, **caractérisée en ce qu'**elle possède, pour une épaisseur de 4 mm, une luminosité Y supérieure à 84 % et/ou une couleur c* inférieure ou égale à 3 et/ou une valeur de haze < 2,5 %.

**22.** Vitrocéramique selon l'une des revendications 20 ou 21, **caractérisée en ce qu'**elle présente, après le passage de la lumière de l'illuminant standard D65 pour une épaisseur de 4 mm, une coloration c* dans le système chromatique CIELAB, la luminosité Y dans le système chromatique CIE satisfaisant à la relation suivante :

$$Y^* \geq d \cdot c^* + e$$

avec d = 1,83, avec e $\geq$ 84,4 et avec $0 \leq$ c* < 3.

23. Procédé de fabrication d'un verre de silicate de lithium-aluminium cristallisable selon l'une des revendications 1 à 19, **caractérisé par** les étapes suivantes :

    a) Préparation d'un mélange de matières premières techniques, contenant des fractions de mélange pulvérulentes et 20 à 80 % en poids de tessons ;
    b) Fusion du mélange et purification à des températures supérieures à 1600 °C ;
    c) Refroidissement du verre en fusion et façonnage à des températures proches de la température de traitement $V_A$ ; et
    d) Refroidissement dans un four de détente jusqu'à la température ambiante, ce qui permet d'éliminer les tensions indésirables dans le verre.

24. Procédé de fabrication d'un verre céramique selon l'une des revendications 20 à 22, **caractérisé en ce que** la céramisation est réalisée avec les étapes de procédé suivantes :

    a) augmentation de la température du verre cristallisable à une température $T_a$ comprise entre 680 °C et 730 °C en l'espace de 3 à 60 minutes ;
    b) augmentation de la température du verre cristallisable dans la plage de températures de nucléation, de la température $T_a$ à 800 °C, pendant une période de 10 à 100 minutes ;
    c) augmentation de la température du verre contenant des germes de cristallisation en l'espace de 5 à 80 minutes dans la plage de températures à vitesse de croissance cristalline élevée de 850 °C à 950 °C ;
    d) maintien dans la plage de températures à la température maximale de 850 °C à 950 °C pendant 0 à 60 minutes, des cristaux de type cristal mixte de quartz élevé se développant sur les germes de cristallisation,
    e) refroidissement rapide du verre céramique obtenu à la température ambiante en moins de 150 minutes,

la céramisation du verre ayant une durée totale inférieure à 300 minutes.

25. Utilisation d'un verre céramique selon l'une des revendications 20 à 22, qui se présente sous la forme d'une plaque d'une épaisseur de 2 mm à 20 mm, comme verre de protection contre l'incendie, vitre de foyer, vitre de four, surface de cuisson, revêtement dans le secteur de l'éclairage, vitre de sécurité, plaque de support ou revêtement de four.

**Figur**

Bevorzugter Bereich von Helligkeit und Farbe für erfindungsgemäße Beispiele (○) und Vergleichsbeispiele ( □ )

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3252811 A
- JP 5193985 A
- WO 2008065167 A1
- WO 2008065166 A1
- EP 2883846 A1
- EP 2191962 A1
- EP 1837312 A1
- EP 3018107 A1
- WO 2013124373 A1
- EP 1074520 A1
- EP 1837312 A

**In der Beschreibung aufgeführte Nicht-Patentliteratur**

- Nanophase Glass-Ceramics. *Journal of the American Ceramic Society*, 1999, vol. 82 (1), 5-16